# EUROPEAN PATENT SPECIFICATION

(11) **EP 4 443 226 B1**
(45) Date of publication and mention of the grant of the patent: **02.09.2026**
(21) Application number: 23850289.2
(22) Date of filing: 17.07.2023
(51) Int. Cl.: G02F 1/1337, C08G 77/12, C08G 77/04, C09J 183/04, E06B 9/24, B60J 3/00, B32B 7/12, B32B 7/023

(54) **LIGHT MODULATION DEVICE**
LICHTMODULATIONSVORRICHTUNG
DISPOSITIF DE MODULATION DE LUMIÈRE

(30) Priority: 02.08.2022 KR 20220096243
(43) Date of publication of application: 09.10.2024
(73) Proprietor: LG Chem, Ltd., Yeongdeungpo-gu Seoul 07336 (KR)
(72) Inventor: GIM, Min Jun, Daejeon 34122 (KR); LEE, Beom Jin, Daejeon 34122 (KR); HUH, Doo Young, Daejeon 34122 (KR); OH, Dong Hyun, Daejeon 34122 (KR); YOU, Jung Sun, Daejeon 34122 (KR); KIM, Jin Hong, Daejeon 34122 (KR); KIM, Jung Woon, Daejeon 34122 (KR)
(74) Representative: Goddar, Heinz J.
(86) International application number: PCT/KR2023/010190
(87) International publication number: WO 2024/029782

(56) References cited:
- EP-B1- 3 604 371
- JP-A- 2004 264 658
- KR-A- 20200 093 587
- KR-A- 20210 053 681
- KR-A- 20220 003 865
- KR-A- 20220 015 965
- KR-A- 20220 015 965

## Description

### [Technical Field]

The present application relates to a light modulating device.

### [Background Art]

A light modulating device, in which a light modulation layer comprising a liquid crystal compound and the like is positioned between two substrates, is used for various applications.

In order for the light modulating device to exhibit the desired performance, it is important to control the orientation state of the liquid crystal compound between the substrates. Therefore, when the light modulation layer is a liquid crystal layer, a liquid crystal alignment film is formed on both sides of the liquid crystal layer in order to control the orientation of the liquid crystal compound.

Patent Document 1 discloses a light modulating device having a structure in which a liquid crystal alignment film is formed on one side of a liquid crystal layer and an adhesive layer is formed on the other side instead of the liquid crystal alignment film.

It is described therein that since the adhesive layer disclosed in Patent Document 1 has liquid crystal orientation force, the desired orientation of the liquid crystal compound is possible, without applying a liquid crystal alignment film to one side of the liquid crystal layer.

The light modulating device disclosed in Patent Document 1 has an advantage that the adhesive force of two substrates disposed opposite to each other can be maintained excellently because the adhesive has been applied to one substrate.

However, there is a problem that it is not easy to maintain the orientation of the liquid crystal compound sufficiently stably only with the adhesive layer disclosed in Patent Document 1, and particularly, the orientation of the liquid crystal compound is broken under high temperature conditions, thereby causing optical defects.

### [Prior Art Documents]

(Patent Document 1) Korean Registered Patent Publication No. 1987373

KR 2022 0015965 A discloses a light modulating device comprising: first and second substrates disposed opposite to each other; a liquid crystal layer present between the first and second substrates; and a silicone polymer layer present between the first substrate and the liquid crystal layer, wherein the silicone polymer layer is cured layer of a curable composition comprising at polyorganosiloxane, namely a methyl hydrogen polysiloxane blocking with trimethyl siloxane groups at both ends of the molecular chain.

KR 2021 0053681 A discloses a light modulating device comprising a pressure sensitive adhesive layer.

### [Disclosure]

### [Technical Problem]

The present application provides a light modulating device. The present application is intended to provide a light modulating device that stably maintains orientation of a liquid crystal compound, while securing adhesive force between substrates disposed opposite to each other by applying a pressure-sensitive adhesive layer or adhesive layer, and particularly, is capable of stably maintaining or implementing the desired orientation state of the liquid crystal compound even at high temperatures for a long period of time.

### [Technical Solution]

The present invention provides a light modulating device according to claim 1. Further embodiments are disclosed in the dependent claims.

In this specification, the term 'vertical, parallel, orthogonal, or horizontal' defining an angle and an angular numerical value mean 'substantially vertical, parallel, orthogonal, or horizontal' and the substantially numerical value of the angle within a range without impairing the desired effect. The vertical, parallel, orthogonal, or horizontal and the numerical range include errors such as manufacturing errors or deviations (variations). For example, the above cases may each include an error within about ±3 degrees, an error within about ±2 degrees, an error within about ±1 degree, an error within about ±0.8 degrees, an error within about ±0.6 degrees or an error within about ±0.4 degrees.

Among physical properties mentioned in this specification, when the measured temperature affects relevant physical properties, the physical properties are physical properties measured at room temperature, unless otherwise specified. The term room temperature is a temperature in a state without particularly warming and cooling, which may mean one temperature in a range of about 10°C to 30°C, for example, a temperature of about 15°C or higher, 18°C or higher, 20°C or higher, or about 23°C or higher, and about 27°C or lower. Unless otherwise specified, the unit of the temperature mentioned herein is °C.

Unless otherwise specified, the angle formed by any two directions, which is mentioned herein, may be an acute angle of acute angles to obtuse angles formed by the two directions, or may be a small angle from angles measured in clockwise and counterclockwise directions. Thus, unless otherwise specified, the angles mentioned herein are positive. However, in order to display the measurement direction between the angles measured in the clockwise direction or the counterclockwise direction, if necessary, the angle measured in the clockwise direction may be represented as a positive number, and the angle measured in the counterclockwise direction may be represented as a negative number.

In addition, unless otherwise specified in this specification, the reference wavelength for the transmittance, refractive index, in-plane phase difference or thickness direction phase difference, and the like is about 550 nm.

In the present application, the term light modulating device may mean an element capable of switching between at least two or more different light states. Here, the different light states may mean, for example, different transmittance states.

As an example of the state that the light modulating device can implement, transparent and black mode states may be exemplified. In one example, the light modulating device of the present application may be an element capable of switching between at least the transparent and black mode states.

The transmittance of the light modulating device in the transparent mode may be at least 10% or more, 12% or more, 14% or more, 16% or more, 18% or more, 20% or more, 22% or more, or 24% or more or so. In another example, the transmittance in the transparent mode may also be 100% or less, 95% or less, 90% or less, 85% or less, 80% or less, 75% or less, 70% or less, 65% or less, 60% or less, 55% or less, 50% or less, 45% or less, 40% or less, 35% or less, or 30% or less or so. However, since higher transmittance in the transparent mode is more advantageous, the upper limit is not particularly limited.

In the black mode state, the transmittance of the light modulating device may be 10% or less, 9% or less, 8% or less, 7% or less, 6% or less, 5% or less, 4% or less, 3% or less, 2% or less, 1% or less, 0.8% or less, 0.6% or less, 0.4% or less, or 0.2% or less. In another example, the transmittance in the black mode may also be 0% or more, or 0.1% or more or so. However, the lower limit of the transmittance in the black mode state is not particularly limited because the lower the transmittance in the black mode, the more advantageous it is.

The transmittance may be, for example, linear light transmittance. The linear light transmittance is a percentage of the ratio of the light transmitted in the same direction as the incident direction to the light incident on the element. For example, if the element is in the form of a film or sheet, the percentage of the light transmitted through the element in the direction parallel to the normal direction among the light incident in a direction parallel to the normal direction of the film or sheet surface may be defined as the transmittance.

The transmittance may be each transmittance for any one wavelength in the visible light region, for example, any one wavelength in a range of about 400 to 700 nm or about 380 to 780 nm, or transmittance for the entire visible light region, maximum or minimum transmittance among the transmittance for the entire visible light region, or an average value of the transmittance in the visible light region.

In another example, the transmittance may be transmittance for light with a wavelength of about 550 nm.

The light modulating device of the present application may be designed to be able to switch between at least two or more states of any one state and another state selected from the transparent and black mode states. If necessary, other states other than the above states, for example, other third states, or higher states including intermediate transmittance states of the transparent mode and black mode states, and the like may also be implemented.

The switching of the light modulating device may be controlled depending on whether an external signal, for example, an electrical signal is applied. For example, in a state of not applying the external signal such as a voltage, the light modulating device may maintain any one of the above-described states, and then may be switched to another state when a voltage is applied. The state of the mode may be changed or the third different mode state may also be implemented, by changing the intensity, frequency and/or shape of the applied voltage.

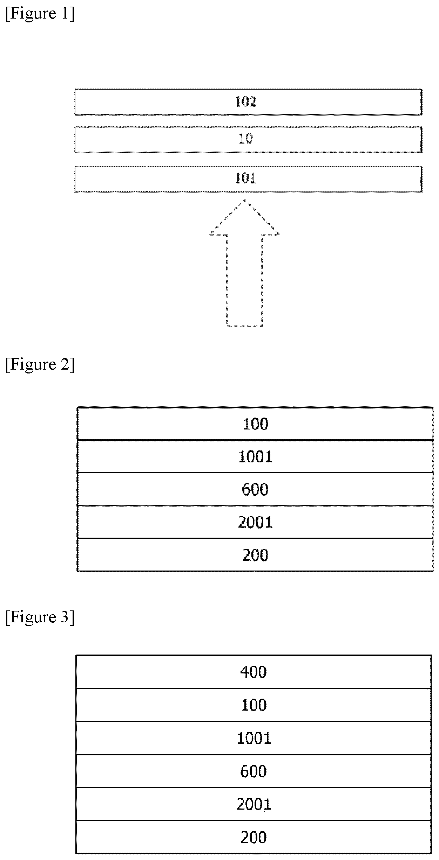

The light modulating device in the present application may comprise two substrates disposed opposite to each other and a transmittance variable layer positioned between the substrates. Figure 2 is a diagram showing one example of the structure. As shown in the drawing, the light modulating device comprises a first substrate (100) and a second substrate (200) which are oppositely disposed. The first and second substrates may each have a first surface and a second surface. Here, the first surface may be one major surface of the substrate, and the second surface may mean a major surface opposite thereto.

As shown in Figure 2, a functional layer (1001) may be formed on one surface (e.g., the first surface) of the first substrate (100), and a liquid crystal alignment film (2001) may be formed on one surface (e.g., the first surface) of the second substrate (200). Here, the functional layer may be a silicone polymer layer to be described below. A transmittance variable layer (600) is positioned between the oppositely disposed first substrate (100) and second substrate (200). The type of the transmittance variable layer is not particularly limited, and usually, a liquid crystal layer may be used as the transmittance variable layer. When the transmittance variable layer is a liquid crystal layer, a liquid crystal alignment film is usually formed on both surfaces of the first and second substrates (100, 200), but a silicone polymer layer to be described below is formed on the first substrate (100) instead of the liquid crystal alignment film, and a liquid crystal alignment film is formed only on the second substrate (200), whereby the orientation state of the liquid crystal compound, which is very useful in a specific application (e.g., smart window, sunroof, or eyewear), can also be obtained. In this case, a liquid crystal alignment film is not formed on the first substrate. In addition, although not shown in the drawing, in any one of the first and second substrates of the light modulating device, a spacer for maintaining an interval (cell gap) between the first and second substrates is present, but when the functional layer (1001) on the first substrate (100) can serve as the pressure-sensitive adhesive layer or adhesive layer (1001), the pressure-sensitive adhesive layer or adhesive layer (1001) is attached to the spacer, thereby being capable of greatly improving lamination force between the first and second substrates.

Thus, the light modulating device of the present application comprisse first and second substrates disposed opposite to each other; and a liquid crystal layer present between the first and second substrates, wherein as the functional layer, a silicone polymer layer is present between the first substrate and the liquid crystal layer.

As the substrate, a known substrate material may be used without special limitation. For example, as the substrate, an inorganic film such as a glass film, a crystalline or amorphous silicon film, or a quartz or ITO (indium tin oxide) film, or a plastic film, and the like may be used. As the plastic film, a substrate comprising TAC (triacetyl cellulose); COP (cyclo olefin copolymer) such as norbornene derivative substrates; PMMA (poly(methyl methacrylate); PC (polycarbonate); PE (polyethylene); PP (polypropylene); PVA (polyvinyl alcohol); DAC (diacetyl cellulose); PAC (polyacrylate); PES (poly ether sulfone); PEEK (polyetheretherketon ); PPS (polyphenylsulfone), PEI (polyetherimide); PEN (polyethylenenaphthatlate); PET (polyethyleneterephtalate); PI (polyimide); PSF (polysulfone); PAR (polyarylate) or an amorphous fluororesin, and the like may be used, but is not limited thereto. The thickness of such a substrate is not particularly limited, which may be selected from an appropriate range.

In one example, as the substrate, an optically anisotropic film may also be applied. A film having such optical anisotropy is also usually anisotropic in mechanical properties, and it is possible to provide a light modulating device having superior durability and the like by utilizing such anisotropy.

In one example, the anisotropic film may have an in-plane phase difference of about 500 nm or more. The in-plane phase difference is a value for light with a wavelength of 550 nm, and is a physical quantity defined by the following Equation A. In another example, the in-plane phase difference of the retardation film may be 600 nm or more, 700 nm or more, 800 nm or more, 900 nm or more, 1,000 nm or more, 1,100 nm or more, 1,200 nm or more, 1,300 nm or more, 1,400 nm or more, 1,500 nm or more, 2,000 nm or more, 2,500 nm or more, 3,000 nm or more, 3,500 nm or more, 4,000 nm or more, 4,500 nm or more, 5,000 nm or more, 5,500 nm or more, 6,000 nm or more, 6,500 nm or more, 7,000 nm or more, 7,500 nm or more, 8,000 nm or more, 8,500 nm or more, 9,000 nm or more, or 9,500 nm or more, or may also be 100,000 nm or less, 90,000 nm or less, 80,000 nm or less, 70,000 nm or less, 60,000 nm or less, 50,000 nm or less, 40,000 nm or less, 30,000 nm or less, 20,000 nm or less, 15,000 nm or less, 14,000 nm or less, 13,000 nm or less, 12,000 nm or less, 10,000 nm or less, 9,500 nm or less, 9,000 nm or less, 8,500 nm or less, 8,000 nm or less, 7,500 nm or less, 7,000 nm or less, 6,500 nm or less, 6,000 nm or less, 5,500 nm or less, 5,000 nm or less, or 4,500 nm or less or so.

A specific kind of the film applicable to the substrate is not particularly limited as long as it exhibits an in-plane phase difference in the above-mentioned range. For example, an anisotropic polymer film to which optical anisotropy is imparted by stretching may be applied. The polymer film may be exemplified by, for example, a polyolefin film such as a polyethylene film or a polypropylene film, a cyclo olefin polymer (COP) film such as a polynorbornene film, a polyvinyl chloride film, a polyacrylonitrile film, a polysulfone film, a polyacrylate film, a PVA (polyvinyl alcohol) film or a cellulose ester-based polymer film such as a TAC (triacetyl cellulose) film, a polyester film or a polycarbonate film, or a copolymer film of two or more monomers among monomers forming the polymer, and the like.

In one example, as the film, a polyester film such as a PET (polyethylene terephthalate) film may be applied. That is, a film exhibiting an in-plane phase difference in the above-described range is known in the industry, and in the case of a polymer film, such a film exhibits asymmetry even in mechanical properties by stretching or the like in the manufacturing process as well as optically large anisotropy. A representative example of such a retardation film known in the industry is a stretched polyester film such as a stretched PET (poly(ethylene terephthalate)) film.

In one example, a polyester film such as a PET film may be applied as the film, but the type of film applicable as a substrate in the present application is not limited thereto.

The in-plane phase difference is a physical quantity according to Equation A below. ${R}_{in} = d \times \left({n}_{x}-{n}_{y}\right)$

In Equation A, Rᵢₙ is the in-plane phase difference, nₓ is the refractive index of the film in the slow axis direction, n_{y} is the refractive index of the film in the fast axis direction, and d is the thickness of the film. Here, the meanings of the slow axis and the fast axis are known in the industry.

When the anisotropic film is simultaneously applied to the first and second substrates, the substrates may be disposed such that their slow axes are parallel or perpendicular to each other.

The light modulating device may comprise at least a transmittance variable layer for the switching. In one example, the transmittance variable layer may be a layer generating a polarization component. An example of such a transmittance variable layer includes an active liquid crystal layer.

The term active liquid crystal layer may mean, as a layer comprising at least a liquid crystal compound, a liquid crystal layer capable of controlling an orientation state of the liquid crystal compound through external signal application or the like. However, the application of the active liquid crystal layer is one example of the present application, and if necessary, other known transmittance variable layers, for example, an electrochromic material layer, a photochromic material layer, an electrophoretic material layer or a dispersed particle orientation layer, and the like may also be used.

The active liquid crystal layer is a layer containing a liquid crystal compound. In this specification, the range of the term active liquid crystal layer includes all layers containing a liquid crystal compound whose orientation can be controlled through external signal application or the like, and for example, as described below, a so-called guest host layer containing a liquid crystal compound (liquid crystal host) and a dichroic dye is also a kind of liquid crystal layer defined in this specification. As the liquid crystal compound, any kind of liquid crystal compound can be used as far as the orientation direction can be changed by application of an external signal. For example, a smectic liquid crystal compound, a nematic liquid crystal compound or a cholesteric liquid crystal compound can be used as the liquid crystal compound. Furthermore, the liquid crystal compound may be, for example, a compound which has no polymerizable group or cross-linkable group so that the orientation direction can be changed by application of an external signal.

The liquid crystal layer may comprise a liquid crystal compound whose dielectric constant anisotropy is positive or negative. The absolute value of the dielectric constant anisotropy of the liquid crystal can be appropriately selected in consideration of the object of the present application. The term dielectric constant anisotropy (Δε) may mean a difference (εp - εv) between the horizontal dielectric permittivity (εp) and the vertical permittivity (εv) of the liquid crystal. In this specification, the term horizontal permittivity (εp) means a dielectric constant value measured along the direction of an electric field in a state where a voltage is applied so that the director of the liquid crystal and the direction of the electric field by the applied voltage are substantially horizontal, and the vertical permittivity (εv) means a dielectric constant value measured along the direction of an electric field in a state where a voltage is applied so that the director of the liquid crystal and the direction of the electric field by the applied voltage are substantially perpendicular.

For example, the refractive index anisotropy (Δn) of the liquid crystal layer may be in a range of 0.01 to 0.5. In another example, the refractive index anisotropy may be 0.02 or more, 0.03 or more, 0.04 or more, 0.05 or more, 0.06 or more, 0.07 or more, 0.08 or more, or 0.085 or more, or may be 0.45 or less, 0.4 or less, 0.35 or less, 0.3 or less, 0.25 or less, 0.2 or less, 0.15 or less or 0.1 or less or so. The refractive index anisotropy of the liquid crystal layer is selected according to the purpose, which is not limited thereto.

The driving mode of the liquid crystal layer may be exemplified by, for example, a DS (dynamic scattering) mode, an ECB (electrically controllable birefringence) mode, an IPS (in-plane switching) mode, an FFS (fringe-field switching) mode, an OCB (optically compensated bend) mode, a VA (vertical alignment) mode, an MVA (multi-domain vertical alignment) mode, a PVA (patterned vertical alignment) mode, an HAN (hybrid aligned nematic) mode, a TN (twisted nematic) mode, an STN (super twisted nematic) mode or R-TN (reversed twisted nematic) mode, and the like.

The liquid crystal layer of the present application may be designed (formed) to be capable of implementing at least twisted orientation in the above modes. The twisted orientation means a state where the liquid crystal compounds in the liquid crystal layer are oriented in a twisted form based on an imaginary spiral axis, and this twisted orientation may be implemented in a state where the liquid crystal compounds of the liquid crystal layer are horizontally oriented, vertically oriented, obliquely oriented or spray-oriented. In addition, the twisted orientation may be implemented in the initial state of the liquid crystal layer or may also be implemented in a state to which an external signal is applied.

In one example, the liquid crystal layer may be designed (formed) to be capable of switching at least between the vertical orientation state and the twisted orientation state. For example, it may implement any one of the two states in the initial state, or may be switched to the other state when an external signal (e.g., an electrical signal such as a voltage) is applied.

In one example, the vertical orientation state may be implemented in the initial state.

The light modulating device of the present application may be designed so that the orientation state (particularly, the vertical orientation state) of the liquid crystal layer may be stably maintained even at a high temperature.

The light modulating device comprising: the first and second substrates; and a liquid crystal layer present between the first and second substrates has an absolute value of ΔT of Equation 1 below in a predetermined range. $Δ T = 100 \times \frac{\left({T}_{2}-{T}_{1}\right)}{{T}_{1}}$

In Equation 1, T₂ is the transmittance measured at 90°C in a state where the light modulating device is placed between two sheets of orthogonal polarizers after maintaining the light modulating device at 90°C for 5 minutes. In Equation 1, T₁ is the transmittance measured at 25°C in a state where the light modulating device is placed between two sheets of orthogonal polarizers before being maintained at 90°C for 5 minutes.

The T₁ and T₂ in Equation 1 are the transmittance measured when the liquid crystal layer of the light modulating device is in a state of vertical orientation, and the liquid crystal layer is in a vertical orientation state in a process of maintaining the light modulating device at 90°C for 5 minutes.

The unit of T₁ and T₂ in Equation 1 is %, which is a value evaluated by the method described in Examples to be described below.

Figure 1 is a diagram showing a process of confirming the T₁ and T₂.

As shown in Figure 1, the transmittance T₁ and T₂ may be measured in a state where the light modulating device (10) is positioned between two sheets of orthogonal polarizers (101, 102). As shown in Figure 1, the transmittance is the transmittance measured, after allowing light to be incident on any one polarizer (101) of two sheets of orthogonal polarizers (101, 102) (in the direction of the arrow in Figure 1), from the other polarizer (102) side. The incidence of the light and the measurement of the transmittance are performed in a direction parallel to the normal direction of the surfaces of the polarizers (101, 102).

Here, the orthogonal polarizers mean a state in which the light absorption axes of two sheets of polarizers (101, 102) are perpendicular to each other. In general, when the transmittance is measured in a state where the light absorption axis of one polarizer of two sheets of polarizers is fixed while the light absorption axis of the other polarizer is rotated with respect to the light absorption axis, the point where the lowest transmittance appears is regarded as the point where the light absorption axes of two sheets of polarizers are perpendicular to each other. In the process of measuring the T₁ and T₂, when the first and/or second substrates of the light modulating device are anisotropic substrates, the slow axis of the relevant substrate is arranged parallel to the light absorption axis of any one of two sheets of polarizers.

The liquid crystal layer is positioned between two orthogonal polarizers as shown in Figure 1 in the case of the vertical orientation state, and if the transmittance is measured, the transmittance is measured to be low. However, when the vertical orientation property of the liquid crystal layer is damaged or deteriorated while the liquid crystal layer is maintained at a high temperature for a certain period of time (maintained at 90°C for 5 minutes) in a vertically oriented state, the T₂ thus measured appears higher than T₁.

However, in the light modulating device of the present application, the orientation property (especially vertical orientation property) of the liquid crystal layer can be stably maintained even at a high temperature, so that the absolute value of ΔT may be below a certain level. The absolute value of ΔT is 300% or less, 290% or less, 280% or less, 270% or less, 260% or less, 250% or less, 240% or less, 230% or less, 220% or less, 210% or less, 200% or less, 190% or less, 180% or less, 170% or less, 160% or less, 150% or less, 140% or less, 130% or less, 120% or less, 110% or less, 100% or less, 95% or less, 90% or less, 85% or less, 80% or less, 75% or less, 70% or less, 65% or less, 60% or less, 55% or less, 50% or less, 45% or less, 40% or less, 35% or less, 30% or less, 25% or less, 20% or less, 15% or less, 10% or less, 5% or less, 4% or less, 3% or less, 2% or less, 1% or less, or 0.5% or less or so, or may be substantially 0%. The absolute value of ΔT may also be 0% or more, 0.5% or more, 1% or more, 1.5% or more, 2% or more, 2.5% or more, 3% or more, 3.5% or more, 4% or more, 4.5% or more, 5% or more, 5.5% or more, 6% or more, 6.5% or more, 7% or more, 7.5% or more, 8% or more, 8.5% or more, 9% or more, 9.5% or more, or 10% or more or so. The absolute value of ΔT may be within a range between any one of the above-described lower limits and any one of the above-described upper limits.

The specific numerical value of T₂ is not particularly limited, but in one example, it may be 2% or less or so. In another example, T₂ may be 1.8% or less, 1.6% or less, 1.4% or less, 1.2% or less, 1% or less, 0.8% or less, 0.6% or less, 0.4% or less, or 0.2% or less or so. The lower limit of T₂ is not limited, and for example, T₂ may be 0% or more.

A method of measuring T₁ and T₂ above is specifically described in Examples.

The transmittance variable layer, which is a liquid crystal layer, basically comprises the liquid crystal compound, which may also comprise additional components if necessary.

For example, the liquid crystal layer, which is the transmittance variable layer, may also comprise a so-called chiral dopant together with the liquid crystal compound. Such a chiral dopant may induce the orientation of the helical structure, that is, the twisted orientation in the liquid crystal compound.

The chiral dopant that can be included in the transmittance variable layer can be used without special limitation if it can induce a desired rotation (twisting) without deteriorating the liquid crystallinity, for example, the nematic regularity. The chiral dopant for inducing rotation in the liquid crystal molecules needs to include at least chirality in the molecular structure. The chiral dopant may be exemplified by, for example, a compound having one or two or more asymmetric carbons, a compound having an asymmetric point on a heteroatom, such as a chiral amine or a chiral sulfoxide, or a compound having axially asymmetric and optically active sites such as cumulene or binaphthol. The chiral dopant may be, for example, a low molecular weight compound having a molecular weight of 1,500 or less. As the chiral dopant, commercially available chiral nematic liquid crystals, for example, chiral dopant liquid crystal S811 commercially available from Merck Co., Ltd., or BASF's LC756 may be applied.

There is also no special limitation on the ratio of the chiral dopant, but it may be added so that the ratio (d/p) of the thickness (d, cell gap) of the transmittance variable layer to the pitch (pitch of the twisted orientation) (p) of the helical structure of the liquid crystal compound generated by the addition of the chiral dopant may satisfy a K value to be described below.

The pitch (p) of the so-called twist-oriented transmittance variable layer (liquid crystal layer) to which the chiral dopant is applied may be measured by a measurement method using a wedge cell, and it may be measured by a method described in Simple method for accurate measurement of the cholesteric pitch using a stripe-wedge Grandjean-Cano cell of D. Podolskyy, et al. (Liquid Crystals, Vol. 35, No. 7, July 8, 2008, 789-791). In addition, the content (weight%) of the chiral dopant is calculated by an equation of 100/(HTP (helical twisting power) × pitch (nm)), which may be selected in an appropriate ratio in consideration of the desired pitch (p).

The liquid crystal layer may be designed such that the ratio (d/p) of the thickness (d, cell) of the transmittance variable layer (liquid crystal layer) to the pitch (p) of the twisted orientation is less than 1. In another example, the ratio (d/p) may be 0.95 or less, 0.9 or less, 0.85 or less, 0.8 or less, 0.75 or less, 0.7 or less, 0.65 or less, 0.6 or less, 0.55 or less, 0.5 or less, 0.45 or less, 0.4 or less, 0.35 or less, 0.3 or less, 0.25 or less, or 0.2 or less, or may also be 0.1 or more, 0.15 or more, 0.2 or more, 0.25 or more, 0.3 or more, 0.35 or more, 0.4 or more, 0.45 or more, or 0.5 or more or so.

The liquid crystal layer may be designed so that the pitch (p) of the twisted orientation is in the range of 1 to 100 µm. In another example, the ratio may be 2 µm or more, 3 µm or more, 4 µm or more, 5 µm or more, 6 µm or more, 7 µm or more, 8 µm or more, 9 µm or more, 10 µm or more, 11 µm or more, 12 µm or more, 13 µm or more, 14 µm or more, 15 µm or more, 16 µm or more, 17 µm or more, 18 µm or more, 19 µm or more, or 19.5 µm or more, or may also be 95 µm or less, 90 µm or less, 85 µm or less, 80 µm or less, 75 µm or less, 70 µm or less, 65 µm or less, 60 µm or less, 55 µm or less, 50 µm or less, 45 µm or less, 40 µm or less, 35 µm or less, 30 µm or less, or 25 µm or less or so.

The thickness (d, cell gap) of the liquid crystal layer may be in the range of 0.5µm to 50µm. In another example, the thickness (d, cell gap) may be 1 µm or more, 1.5 µm or more, 2 µm or more, 2.5 µm or more, 3 µm or more,3.5 µm or more, 4 µm or more, 4.5 µm or more, 5 µm or more, 5.5 µm or more, 6 µm or more, 6.5 µm or more, 7 µm or more, 7.5 µm or more, 8 µm or more, 8.5 µm or more, 9 µm or more, 9.5 µm or more, or 10 µm or more, or may also be 48 µm or less, 46 µm or less, 44 µm or less, 42 µm or less, 40 µm or less, 38 µm or less, 36 µm or less, 34 µm or less, 32 µm or less, 30 µm or less, 28 µm or less, 26 µm or less, 24 µm or less, 22 µm or less, 20 µm or less, 18 µm or less, 16 µm or less, 14 µm or less, 12 µm or less, or 10 µm or less or so.

Through such a design, it is possible to provide a light modulating device in which the object of the present application is more efficiently achieved.

In the transmittance variable layer (liquid crystal layer), other necessary additional components (e.g., dichroic dye, etc.) may also be included.

In the light modulating device, a silicone polymer layer is present between the first substrate and the liquid crystal layer. The term silicone polymer layer means a layer comprising a silicone polymer in an amount of 50% or more, 55% or more, 60% or more, 65% or more, 70% or more, 75% or more, 80% or more, 85% or more, 90% or more, or 95% or more by weight. The upper limit of the ratio of the silicone polymer in the silicone polymer layer may be 100% or less, or less than 100% or so.

Such a silicone polymer layer may be directly formed on the surface of the first substrate facing the liquid crystal layer, or another layer (e.g., an electrode layer to be described below) may be present between the first substrate and the silicone polymer layer.

In one example, the silicone polymer layer may be a so-called adhesive layer or pressure-sensitive adhesive layer.

The silicone polymer layer may be formed on the surface of the first substrate. Such a silicone polymer layer may be formed to have an area of 70% or more of the total area of the first substrate. The area of the silicone polymer layer may be 75% or more, 80% or more, 85% or more, 90% or more, or 95% or more or so of the total area of the first substrate. The upper limit of the area of the silicone polymer layer is not particularly limited, which may be, for example, 100% or less, or less than 100% or so of the total area of the first substrate.

Such a silicone polymer layer may be included in the light modulating device in a state in contact with the liquid crystal layer.

The material forming the silicone polymer layer is not particularly limited. In one example, when the silicone polymer layer is an adhesive layer or a pressure-sensitive adhesive layer, a silicone pressure-sensitive adhesive layer or a silicone adhesive layer may be applied as the silicone polymer layer. For example, there are various types of silicone-based pressure-sensitive adhesives or silicone-based adhesives known in the industry as so-called OCAs (optically clear adhesives) or OCRs (optical clear resins), and these pressure-sensitive adhesives or adhesives can be combined a liquid crystal alignment film in a state where a compound to be described below is included to induce suitable orientation of the liquid crystal compound.

The specific surface characteristics of the silicone polymer layer may induce the orientation state of the liquid crystal compound suitable for the purpose in combination with the liquid crystal alignment film (especially, vertical alignment film).

As the silicone-based pressure-sensitive adhesive or adhesive, a cured product of a curable silicone adhesive or pressure-sensitive adhesive composition (hereinafter, may be simply referred to as a curable silicone composition) may be used. The type of curable silicone composition is not particularly limited, and for example, a heat-curable silicone composition may be used.

In one example, the curable silicone composition is an addition-curable silicone composition, which may comprise (1) a polyorganosiloxane containing two or more alkenyl groups in the molecule, and (2) a polyorganosiloxane containing two or more silicon-bonded hydrogen atoms in the molecule. Such a silicone compound may form a cured product by an addition reaction, for example, in the presence of a catalyst such as a platinum catalyst.

The (1) polyorganosiloxane comprises, as a main component constituting the silicone cured product, at least two alkenyl groups in one molecule. At this time, a specific example of the alkenyl group includes a vinyl group, an allyl group, a butenyl group, a pentenyl group, a hexenyl group or a heptenyl group, and the like, and a vinyl group of the foregoing is usually applied, but is not limited thereto. In the (1) polyorganosiloxane, the bonding position of the alkenyl group as described above is not particularly limited. For example, the alkenyl group may be bonded to the end of the molecular chain and/or to the side chain of the molecular chain. In addition, in the (1) polyorganosiloxane, the type of the substituent that may be included in addition to the above-described alkenyl may include an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenethyl group; a halogen-substituted alkyl group such as a chloromethyl group, a 3-chloropropyl group or a 3,3,3-trifluoropropyl group, and the like, and a methyl group or a phenyl group of the foregoing is usually applied, but is not limited thereto.

The molecular structure of the (1) polyorganosiloxane is not particularly limited, which may also have any shape, such as linear, branched, cyclic, reticulated, or linear with partially branched. One having a linear molecular structure among such molecular structures is usually applied, but is not limited thereto.

A more specific example of the (1) polyorganosiloxane may include a dimethylsiloxane-methylvinylsiloxane copolymer blocking with trimethylsiloxane groups at both ends of the molecular chain, a methylvinylpolysiloxane blocking with trimethylsiloxane groups at both ends of the molecular chain, a dimethylsiloxane-methylvinylsiloxane-methylphenylsiloxane copolymer blocking with trimethylsiloxane groups at both ends of the molecular chain, a dimethylpolysiloxane blocking with dimethylvinylsiloxane groups at both ends of the molecular chain, a methyl vinylpolysiloxane blocking with dimethylvinylsiloxane groups at both ends of the molecular chain, a dimethylsiloxane-methylvinylsiloxane copolymer blocking with dimethylvinylsiloxane groups at both ends of the molecular chain, a dimethylsiloxane-methylvinylsiloxane-methylphenylsiloxane copolymer blocking with dimethylvinylsiloxane groups at both ends of the molecular chain, a polyorganosiloxane copolymer comprising a siloxane unit represented by R¹₂SiO_{2/2} and a siloxane unit represented by R¹₂R²SiO_{1/2} and a siloxane unit represented by SiO_{4/2}, a polyorganosiloxane copolymer comprising a siloxane unit represented by R¹₂R²SiO_{1/2} and a siloxane unit represented by SiO_{4/2}, a polyorganosiloxane copolymer comprising a siloxane unit represented by R¹R²SiO_{2/2} and a siloxane unit represented by R¹SiO_{3/2} or a siloxane unit represented by R²SiO_{3/2}, and a mixture of two or more of the foregoing, but is not limited thereto. Here, R¹ is a hydrocarbon group other than an alkenyl group, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like. In addition, here, R² is an alkenyl group, which may be, specifically, a vinyl group, an allyl group, a butenyl group, a pentenyl group, a hexenyl group or a heptenyl group, and the like.

The molecular structure of the (2) polyorganosiloxane is not particularly limited, and may also have any shape, such as linear, branched, cyclic, reticulated, or linear with partially branched. One having a linear molecular structure among such molecular structures is usually applied, but is not limited thereto.

A more specific example of the (2) polyorganosiloxane may include a methylhydrogenpolysiloxane blocking with trimethylsiloxane groups at both ends of the molecular chain, a dimethylsiloxane-methylhydrogen copolymer blocking with trimethylsiloxane groups at both ends of the molecular chain, a dimethylsiloxane-methylhydrogensiloxane-methylphenylsiloxane copolymer blocking with trimethylsiloxane groups at both ends of the molecular chain, a dimethylpolysiloxane blocking with dimethylhydrogensiloxane groups at both ends of the molecular chain, a dimethylsiloxane-methylphenylsiloxane copolymer blocking with dimethylhydrogensiloxane groups at both ends of the molecular chain, a methylphenylpolysiloxane blocking with dimethylhydrogensiloxane groups at both ends of the molecular chain, a polyorganosiloxane copolymer comprising a siloxane unit represented by R¹₃SiO_{1/2}, a siloxane unit represented by R¹₂HSiO_{1/2} and a siloxane unit represented by SiO_{4/2}, a polyorganosiloxane copolymer comprising a siloxane unit represented by R¹₂HSiO_{1/2} and a siloxane unit represented by SiO_{4/2}, a polyorganosiloxane copolymer comprising a siloxane unit represented by R¹HSiO_{2/2} and a siloxane unit represented by R¹SiO_{3/2} or a siloxane unit represented by HSiO_{3/2} and a mixture of two or more of the foregoing, but is not limited thereto. Here, R¹ is a hydrocarbon group other than an alkenyl group, which may be, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenethyl group; a halogen-substituted alkyl group such as a chloromethyl group, a 3-chloropropyl group or a 3,3,3-trifluoropropyl group, and the like.

The content of the (2) polyorganosiloxane is not particularly limited as long as it is included to the extent that appropriate curing can be performed. For example, the (2) polyorganosiloxane may be contained in an amount of 0.5 to 10 silicon-bonded hydrogen atoms per one alkenyl group contained in the (1) polyorganosiloxane as described above. In such a range, curing can be sufficiently performed and heat resistance can be secured.

The addition-curable silicone composition may further comprise platinum or a platinum compound as a catalyst for curing. The specific type of this platinum or platinum compound is not particularly limited. The ratio of the catalyst may also be adjusted to a level that proper curing may be performed.

In addition, the addition-curable silicone composition may also comprise an appropriate additive required from the viewpoint of improving storage stability, handling properties and workability in an appropriate ratio.

The silicone polymer layer may be a cured layer of a curable composition (e.g., the addition curable silicone composition, etc.).

The matter that the curable composition comprises a polyorganosiloxane containing a siloxane unit of Formula 1 below is suitable for forming the desired light modulating device.

[Formula 1] (HRSiO_{2/2})

In Formula 1, R is an alkyl group, an alkoxy group or an aryl group.

As the alkyl group of Formula 1, an alkyl group with 1 to 20 carbon atoms, 1 to 16 carbon atoms, 1 to 12 carbon atoms, 1 to 8 carbon atoms, or 1 to 4 carbon atoms, or a methyl group or an ethyl group may be applied. The alkyl group may be linear, branched, or cyclic, which may be optionally substituted with one or more substituents. In a suitable example, the alkyl group may be an unsubstituted linear alkyl group.

As the alkoxy group of Formula 1, an alkoxy group with 1 to 20 carbon atoms, 1 to 16 carbon atoms, 1 to 12 carbon atoms, 1 to 8 carbon atoms, or 1 to 4 carbon atoms, or a methoxy group or an ethoxy group may be applied. The alkoxy group may be linear, branched, or cyclic, which may be optionally substituted with one or more substituents. In a suitable example, the alkoxy group may be an unsubstituted linear alkoxy group.

The aryl group of Formula 1 may be a monovalent residue derived from a compound containing a benzene ring, or a structure in which two or more benzene rings are connected to each other by an appropriate linker, or condensed or bonded while sharing one or two or more carbon atoms, or a derivative thereof. The range of the aryl group may include a functional group commonly referred to as an aryl group as well as a so-called aralkyl group or arylalkyl group, and the like. The aryl group may be, for example, an aryl group with 6 to 25 carbon atoms, 6 to 21 carbon atoms, 6 to 18 carbon atoms, or 6 to 12 carbon atoms. The aryl group may be exemplified by a phenyl group, dichlorophenyl, chlorophenyl, a phenylethyl group, a phenylpropyl group, a benzyl group, a tolyl group, a xylyl group, or a naphthyl group, and the like.

In a suitable example, R in Formula 1 may be an alkyl group.

A ratio of the number of moles of siloxane units of Formula 1 above to total siloxane units included in the polyorganosiloxane including siloxane units of Formula 1 above may be controlled. In one example, the ratio of the number of moles of siloxane units of Formula 1 above to the number of moles of total siloxane units of the polyorganosiloxane may be 0.001 mol% or more, 0.005 mol% or more, 0.01 mol% or more, 0.05 mol% or more, 0.1 mol % or more, 0.5 mol% or more, 1 mol% or more, 5 mol% or more, 10 mol% or more, 15 mol% or more, 20 mol% or more, 25 mol% or more, or 30 mol% or more or so, or may also be less than 100 mol%, 95 mol% or less, 90 mol% or less, 85 mol% or less, 80 mol% or less, 75 mol% or less, 70 mol% or less, 65 mol% or less, 60 mol% or less, 55 mol% or less, 50 mol% or less, 45 mol% or less, 40 mol% or less, 35 mol% or less, 30 mol% or less, 25 mol% or less, 20 mol% or less, 15 mol% or less, 10 mol% or less, 5 mol% or less, or 1 mol% or less or so. The ratio of the number of moles of siloxane units of Formula 1 above may also be in a range between any one upper limit of the above-described upper limits and any one lower limit of the above-described lower limits.

The polyorganosiloxane may have a linear or branched structure while containing the siloxane unit of Formula 1 above. As is known, the polyorganosiloxane containing only so-called M units (monofunctional siloxane units) and D units (difunctional siloxane units) as siloxane units has a linear structure, where in the polyorganosiloxane with a branched structure, siloxane units, which are so-called T units (trifunctional siloxane units) and/or Q units (tetrafunctional siloxane units), are present.

In one example, even when the polyorganosiloxane has a branched structure, the total ratio of the T units and Q units based on the number of moles of all siloxane units in the relevant polyorganosiloxane is 10 mol% or less, 9 mol% or less, 8 mol% or less, 7 mol% or less, 6 mol% or less, 5 mol% or less, 4 mol% or less, 3 mol% or less, 2 mol% or less, 1 mol% or less, or 0.5 mol% or less, or so, or is suitably more than 0 mol%. When the polyorganosiloxane has a linear structure, the total ratio of the T units and Q units is 0 mol%.

The chain terminal of the polyorganosiloxane may be a siloxane unit of Formula 2 below. That is, in the polyorganosiloxane, the terminal may be blocked by a siloxane unit of Formula 2 below.

[Formula 2] (R¹₃SiO_{1/2})

In Formula 2, R¹ is hydrogen, an alkyl group, an alkoxy group or an aryl group.

Specific examples of the alkyl group, alkoxy group and aryl group in Formula 2 are the same as those of R in Formula 1. In a suitable example, R¹ in Formula 2 may be an alkyl group, an alkoxy group, or an aryl group.

The polyorganosiloxane may further contain a siloxane unit of Formula 3 below.

[Formula 3] (R²₂SiO_{2/2})

In Formula 3, R² is an alkyl group, an alkoxy group or an aryl group.

Specific examples of the alkyl group, alkoxy group and aryl group in Formula 3 are the same as those of R in Formula 1. In a suitable example, R² in Formula 3 may be an alkyl group.

The polyorganosiloxane may have a molar mass in a range of 200 g/mol to 2,000,000 g/mol. The molar mass is a value calculated through the number of moles of silicon atoms, oxygen atoms, carbon atoms, hydrogen atoms, and the like included in the polyorganosiloxane, and their molar masses. The molar mass of the polyorganosiloxane may also be 500 g/mol or more, 1,000 g/mol or more, 3,000 g/mol or more, 5,000 g/mol or more, 7,000 g/mol or more, 9,000 g/mol or more, 10,000 g/mol or more, 30,000 g/mol or more, 50,000 g/mol or more, or 70,000 g/mol or more or so, or may also be 1,500,000 g/mol or less, 1,000,000 g/mol or less, 500,000 g/mol or less, 100,000 g/mol or less, 90,000 g/mol or less, 70,000 g/mol or less, 50,000 g/mol or less, 30,000 g/mol or less, 10,000 g/mol or less, 9,000 g/mol or less, 7,000 g/mol or less, 5,000 g/mol or less, or 4,500 g/mol or less or so. The molar mass may also be in a range between any one lower limit of the above-described lower limits and any one upper limit of the above-described upper limits.

In a specific example, the polyorganosiloxane may be a polyorganosiloxane represented by Formula 4 below.

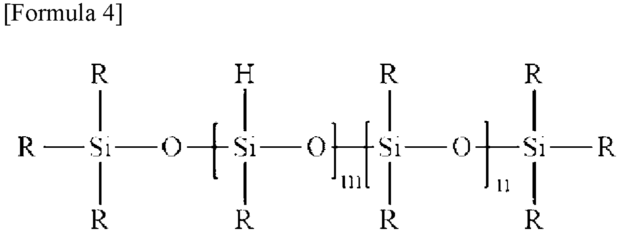

In Formula 4, Rs are each independently an alkyl group, an alkoxy group, or an aryl group, and m and n are arbitrary numbers.

In Formula 4, the siloxane unit of HRSiO_{2/2} and the siloxane unit of R₂SiO_{2/2} are shown in the form of constituting a block copolymer, but this is for convenience of description, and the siloxane units may also be included in the form of constituting a random copolymer.

In Formula 4, m may be 1 or more, 2 or more, 3 or more, 4 or more, 5 or more, 6 or more, 7 or more, 8 or more, 9 or more, or 10 or more or so, or may also be 1,000 or less, 900 or less, 800 or less, 700 or less, 600 or less, 500 or less, 400 or less, 300 or less, 200 or less, 100 or less, 90 or less, 80 or less, 70 or less, 60 or less, 50 or less, 40 or less, 30 or less, 20 or less, 15 or less, 10 or less, 9 or less, 8 or less, 7 or less, 6 or less, or 5 or less or so. The m may be in a range between any one upper limit of the above-described upper limits and any one lower limit of the above-described lower limits.

In Formula 4, n may be 0 or more, 20 or more, 40 or more, 60 or more, 80 or more, 100 or more, 200 or more, 300 or more, 400 or more, 500 or more, 600 or more, 700 or more, 800 or more, or 900 or more or so, or may be 20,000 or less, 15,000 or less, 10,000 or less, 5,000 or less, 1,000 or less, 950 or less, 900 or less, 850 or less, 800 or less, 750 or less, 700 or less, 650 or less, 600 or less, 550 or less, 500 or less, 450 or less, 400 or less, 350 or less, 300 or less, 250 or less, 200 or less, 150 or less, 100 or less, 90 or less, 80 or less, 70 or less, 60 or less, 50 or less, or 40 or less or so. The n may be in a range of any one upper limit of the above-described upper limits and any one lower limit of the above-described lower limits.

In one example, as the polyorganosiloxane of Formula 4, the polyorganosiloxane containing 50 mol% or more, 55 mol% or more, 60 mol% or more, 65 mol% or more, 70 mol% or more, 75 mol% or more, 80 mol% or more, 85 mol% or more, 90 mol% or more, or 95 mol% or more of the alkyl group may be used. There is no special limitation on the upper limit of the ratio of the alkyl group, but the alkyl group may also be included in 100 mol% or less, or less than 100 mol% relative to the total number of moles of R.

The polyorganosiloxane containing the siloxane units of Formula 1 above or the polyorganosiloxane of Formula 4 above may cross-link appropriately the alkenyl group-containing polyorganosiloxane to form a desired silicone polymer layer.

The content of the polyorganosiloxane containing the siloxane units of Formula 1 or the polyorganosiloxane of Formula 4 above in the silicone polymer layer may be adjusted. For example, the content may be 2 weight% or more, 2.5 weight% or more, 3 weight% or more, 3.5 weight% or more, 4 weight% or more, 4.5 weight% or more, 5 weight% or more, 5.5 weight% or more, 6 weight% or more, 6.5 weight% or more, 7 weight% or more, 7.5 weight% or more, 8 weight% or more, 8.5 weight% or more, 9 weight% or more, 9.5 weight% or more, 10 weight% or more, 10.5 weight% or more, 11 weight% or more, 11.5 weight% or more, 12 weight% or more, 12.5 weight% or more, or 13 weight% or more or so. In another example, the content may be 50 weight% or less, 48 weight% or less, 46 weight% or less, 44 weight% or less, 42 weight% or less, 40 weight% or less, 38 weight% or less, 36 weight% or less, 34 weight% or less, 32 weight% or less, 30 weight% or less, 28 weight% or less, 26 weight% or less, 24 weight% or less, 22 weight% or less, 20 weight% or less, 18 weight% or less, 16 weight% or less, 14 weight% or less, 12 weight% or less, 10 weight% or less, 9 weight% or less, 8 weight% or less, 7 weight% or less, 6 weight% or less, 5 weight% or less, or 4 weight% or less or so. The ratio may be controlled within a range between any one upper limit of the above-described upper limits and any one lower limit of the above-described lower limits.

Within such a content range, it is possible to form a light modulating device with excellent durability while achieving a desired orientation state of the liquid crystal compound.

In the silicone polymer layer comprising the polyorganosiloxane, δ of Equation 2 below is within a predetermined range. $δ = \frac{100 \times {M}_{1} \times m \times β}{{M}_{2}}$

In Equation 2, M₁ is the molar mass (g/mol) of the siloxane unit of Formula 1 (in the case of polyorganosiloxane of Formula 4, HRSiO_{2/2} unit) included in the polyorganosiloxane, m is the number of moles of the siloxane unit of Formula 1 included in the polyorganosiloxane (in the case of Formula 4, m), β is the content (weight%) of the polyorganosiloxane containing the siloxane unit of Formula 1 in the silicone polymer layer, and M₂ is the molar mass (g/mol) of the polyorganosiloxane.

In the present application, δ of Equation 2 is 10.5 or more, 11 or more, 12 or more, 13 or more, 14 or more, 15 or more, 16 or more, 17 or more, 18 or more, 19 or more, 20 or more, 21 or more, 22 or more, 23 or more, 24 or more, 25 or more, 26 or more, 27 or more, 28 or more, 29 or more, 30 or more, 31 or more, 32 or more, 33 or more, 34 or more, 35 or more, 36 or more, 37 or more, 38 or more, 39 or more, 40 or more, 41 or more, 42 or more, 43 or more, 44 or more, 45 or more, 46 or more, 47 or more, 48 or more, 49 or more, or 50 or more or so, or may be 100 or less, 95 or less, 90 or less, 85 or less, 80 or less, 75 or less, 70 or less, 65 or less, 60 or less, 55 or less, 50 or less, 45 or less, 40 or less, 35 or less, 30 or less, 25 or less, 20 or less, or 15 or less or so. The δ may be controlled within a range between any one upper limit of the above-described upper limits and any one low limit of the above-described lower limits.

When two or more types of polyorganosiloxanes containing the siloxane unit of Formula 1 exist in the silicone polymer layer, the value obtained by calculating δs for the respective polyorganosiloxanes and then summing them may be designated as the δ value of the silicone polymer layer.

Within such a content range, it is possible to form a light modulating device with excellent durability while achieving a desired orientation state of the liquid crystal compound.

In one example, M₁ in Equation 2 may be 50 g/mol or more, 55 g/mol or more, or 60 g/mol or more or so, or may be 200 g/mol or less, 180 g/mol or less, 160 g/mol or less, 140 g/mol or less, 120 g/mol or less, 100 g/mol or less, 80 g/mol or less, 75 g/mol or less, 70 g/mol or less, or 65 g/mol or less or so. The M₁ may be controlled within a range between any one upper limit of the above-described upper limits and any one lower limit of the above-described lower limits.

In Equation 2, m may be 1 or more, 2 or more, 3 or more, 4 or more, 5 or more, 6 or more, 7 or more, 8 or more, 9 or more, or 10 or more or so, or may also be 1,000 or less, 900 or less, 800 or less, 700 or less, 600 or less, 500 or less, 400 or less, 300 or less, 200 or less, 100 or less, 90 or less, 80 or less, 70 or less, 60 or less, 50 or less, 40 or less, 30 or less, 20 or less, 15 or less, 10 or less, 9 or less, 8 or less, 7 or less, 6 or less, or 5 or less. The m may be within a range between any one upper limit of the above-described upper limits and any one lower limit of the above-described lower limits.

In Equation 2, M₂ may be, for example, 200 g/mol or more, 500 g/mol or more, 1,000 g/mol or more, 3,000 g/mol or more, 5,000 g/mol or more, 7,000 g/mol or more, 9,000 g/mol or more, 10,000 g/mol or more, 30,000 g/mol or more, 40,000 g/mol or more, or 45,000 g/mol or more or so, or may also be 2,000,000 g/mol or less, 1,500,000 g/mol or less, 1,000,000 g/mol or less, 500,000 g/mol or less, 100,000 g/mol or less, 90,000 g/mol or less, 70,000 g/mol or less, 50,000 g/mol or less, 30,000 g/mol or less, 10,000 g/mol or less, 9,000 g/mol or less, 7,000 g/mol or less, 5,000 g/mol or less, 4,500 g/mol or less, 4,000 g/mol or less, 3,500 g/mol or less, 3,000 g/mol or less, 2,500 g/mol or less, 2,000 g/mol or less, or 1,500 g/mol or less or so. M₂ may be within a range between any one lower limit of the above-described lower limits and any one upper limit of the above-described upper limits.

In Equation 2, β may be 2 weight% or more, 2.5 weight% or more, 3 weight% or more, 3.5 weight% or more, 4 weight% or more, 4.5 weight% or more, 5 weight% or more, 5.5 weight% or more, 6 weight% or more, 6.5 weight% or more, 7 weight% or more, 7.5 weight% or more, 8 weight% or more, 8.5 weight% or more, 9 weight% or more, 9.5 weight% or more, 10 weight% or more, 10.5 weight% or more, 11 weight% or more, 11.5 weight% or more, 12 weight% or more, 12.5 weight% or more, or 13 weight% or more or so. In another example, β may be 50 weight% or less, 48 weight% or less, 46 weight% or less, 44 weight% or less, 42 weight% or less, 40 weight% or less, 38 weight% or less, 36 weight% or less, 34 weight% or less, 32 weight% or less, 30 weight% or less, 28 weight% or less, 26 weight% or less, 24 weight% or less, 22 weight% or less, 20 weight% or less, 18 weight% or less, 16 weight% or less, 14 weight% or less, 12 weight% or less, 10 weight% or less, 9 weight% or less, 8 weight% or less, 7 weight% or less, 6 weight% or less, 5 weight% or less, or 4 weight% or less or so. The ratio may be controlled within a range between any one upper limit of the above-described upper limits and any one lower limit of the above-described lower limits.

As the curable composition forming the silicone polymer layer, a known addition-curing composition may be used without special limitation, if it contains the polyorganosiloxane of Formula 1 to satisfy the above conditions. All silicone pressure-sensitive adhesives or adhesives known in the industry as OCA or OCR, and the like may be applied in this application. The silicone polymer layer may be formed by formulating the polyorganosiloxane of Formula 1 with the silicone adhesive or pressure-sensitive adhesive to satisfy the above conditions.

For example, the curable composition may comprise an alkenyl group-containing polyorganosiloxane in addition to the polyorganosiloxane of Formula 1. As the alkenyl group-containing polyorganosiloxane, (1) the polyorganosiloxane containing two or more alkenyl groups in the molecule as described above may be used.

In addition, if the polyorganosiloxane of Formula 1 exists, it may further comprise, as the polyorganosiloxane having a structure different from that of the polyorganosiloxane of Formula 1, (2) the polyorganosiloxane containing two or more silicon-bonded hydrogen atoms in the molecule as described above.

In this case, the content of the alkenyl group-containing polyorganosiloxane and/or the polyorganosiloxane containing two or more silicon-bonded hydrogen atoms in the molecule in the silicone polymer layer or the curable composition, for example, the content may be 60 weight% or more, 65 weight% or more, 70 weight% or more, 75 weight% or more, 80 weight% or more, 85 weight% or more, 90 weight% or more, or 95 weight% or more or so. In another example, the content may be less than 100 weight%, 95 weight% or less, 90 weight% or less, or 87 weight% or less or so. The ratio may be controlled within a range between any one upper limit of the above-described upper limits and any one lower limit of the above-described lower limits.

The curable composition or the silicone polymer layer may also comprise optional components (for example, a catalyst for addition-curing, etc.) in addition to the above components.

The type of the curable composition is not particularly limited, which may be appropriately selected depending on the intended use. For example, a solid, semi-solid or liquid curable composition may be used. The solid or semi-solid curable composition may be cured before the bonding targets are bonded together. The liquid curable composition is referred to as a so-called optical clear resin (OCR), which may be cured after the bonding targets are bonded together.

The thickness of the silicone polymer layer formed of such a curable composition is adjusted according to the purpose, which is not particularly limited, and usually, it may be formed to a thickness within the range of 1 µm to 100 µm.

When the silicone polymer layer is formed on the first substrate, the liquid crystal alignment film may not be formed on the first substrate. Therefore, in this case, a liquid crystal alignment film may not exist between the first substrate and the liquid crystal layer.

In the light modulating device, a liquid crystal alignment film may be present between the liquid crystal layer and the second substrate. Such a liquid crystal alignment film may be formed on a surface of the second substrate, for example, a surface facing the liquid crystal layer.

There is no special limitation on the type of liquid crystal alignment film that can be formed in the light modulating device. As the alignment film, a known vertical or horizontal alignment film, or other alignment films may be applied in consideration of the desired initial orientation. As for the type of alignment film, a contact alignment film such as a rubbing alignment film or a non-contact alignment film such as a photo-alignment film may be applied. In one example, a vertical alignment film may be used as the alignment film. For example, a combination of a vertical alignment film and the above-described silicone polymer layer may induce an orientation state of a liquid crystal compound suitable for various applications.

The initial orientation of the liquid crystal compound formed by the liquid crystal alignment films and/or the silicone polymer layer and the liquid crystal alignment film in the liquid crystal layer may be vertical orientation, horizontal orientation, oblique orientation, or spray orientation. Also, in the vertical orientation, horizontal orientation, oblique orientation or spray orientation state, the liquid crystal compound may or may not be twisted to exist in twisted orientation or cholesteric orientation. The initial orientation means the orientation of the liquid crystal compound in the initial state, that is, the state where external energy is not applied to the liquid crystal layer.

The meaning of the horizontal orientation, oblique orientation, vertical orientation, or spray orientation is as known in the art. While the liquid crystal compound of the transmittance variable layer maintains the horizontal orientation, oblique orientation, vertical orientation, or spray orientation state in the initial state, it can be changed to the other orientation states according to an external signal.

In one example, the initial orientation of the liquid crystal compound in the transmittance variable layer may be vertical orientation or an orientation state like the vertical orientation, and the twisted orientation may be implemented when an external signal is applied. Such an orientation state is obtained by applying a vertical alignment film as the liquid crystal alignment film. This orientation is useful in an element implementing so-called R-TN (reversed twisted nematic) orientation.

The in-plane phase difference (based on a wavelength of 550 nm) of the transmittance variable layer in the vertical orientation or an orientation state like the vertical orientation may be, for example, about 30 nm or less, 25 nm or less, 20 nm or less, 15 nm or less, 10 nm or less, or 5 nm or less, or may be 0 nm or more, or more than 0 nm.

The in-plane phase difference is obtained according to Equation A above, and in this case, nₓ, n_{y} and d in Equation A are the slow axis direction refractive index, the fast axis direction refractive index and the thickness of the transmittance variable layer, respectively.

The light modulating device may further comprise a spacer for maintaining a distance between the first and second substrates. As the spacer, a ball spacer, a column spacer or a partition wall spacer, or a combination of two or more of the foregoing, which is a commonly applied spacer, may be applied. In a suitable example, the partition wall spacer may be used as the spacer, and in particular, the partition wall spacer in which the partition walls form at least one closed figure may be applied. As the closed figure formed by the partition wall spacer, a hexagon (e.g., a regular hexagon, etc.) or a quadrangle (e.g., a square or a rectangle) may be exemplified. The partition wall spacer whose closed figure is a hexagon, particularly a regular hexagon, is also called a so-called honeycomb type spacer. When the shape of the partition wall spacer formed on the substrate is observed from the normal direction of the substrate, such a honeycomb or quadrangular partition wall spacer means the case where the figure formed by the partition wall spacer is a honeycomb type or a quadrangle type, as is well-known. The honeycomb type is usually a combination of regular hexagons, and in the case of the quadrangle type, there may be a square, a rectangle, or a combination of a square and a rectangle, and the like. A partition wall spacer may be used as the spacer in consideration of the adhesion between the first and second substrates, but is not limited thereto.

The pitch of the spacer may also be appropriately selected in consideration of the desired adhesion or cell gap maintaining efficiency, and the like. For example, when the partition wall spacer is applied, the pitch of the partition wall spacer may be in a range of 50µm to 2,000µm. For example, if the partition wall spacer is a honeycomb type, the pitch is obtained through the interval of opposite sides in the hexagon forming the honeycomb, and in the case of a tetragon, the pitch is obtained through the length of the sides of the tetragon. In the case where the intervals of the sides facing each other in the hexagon forming the honeycomb or the lengths of the sides of the tetragon are not constant, an average value of them may be defined as the pitch.

When the partition wall spacer constitutes a closed figure, for example, the area of the closed figure (i.e., the area of, for example, the hexagon or the quadrangle) may be, for example, in a range of about 1 mm² to 200 mm². When a plurality of closed figures is formed by the partition wall spacers and the closed figures have different areas, the area is an arithmetic mean value.

The line width of the partition wall spacer, for example, the width of each wall of the hexagon forming the honeycomb, or the tetragon, may be in a range of, for example, about 5µm to 50µm. In another example, the line width may be about 10 µm or more, or 15 µm or more, or may also be 45 µm or less, 40 µm or less, 35 µm or less, 30 µm or less, 25 µm or less, or 20 µm or less or so.

In such a range, the cell gap may be properly maintained, and adhesion between substrates may also be maintained excellently. For example, when the silicone polymer layer is formed on the first substrate, the combination with the partition wall spacer can provide excellent adhesive force between the substrates.

As a component for applying an external signal to the transmittance variable layer, an electrode layer may be formed on each substrate of the light modulating device. For example, the electrode layer may be present between the first surface and the functional layer (1001) (the liquid crystal alignment film, the pressure-sensitive adhesive or adhesive layer) in the first substrate (between 100 and 1001 in Figure 2) and/or between the first surface and the liquid crystal alignment film in the second substrate (between 200 and 2001 in Figure 2) (if a spacer is present, between the spacer and the alignment film). In the case of the second substrate, it is common that first, an electrode layer is formed on the first surface, and a spacer and an alignment film are formed thereon sequentially, so that when a spacer is present, the electrode layer may be located between the first surface of the second substrate and the spacer and alignment film.

As the electrode layer, a known transparent electrode layer may be applied, and for example, a so-called conductive polymer layer, a conductive metal layer, a conductive nanowire layer, or a metal oxide layer such as ITO (indium tin oxide) may be used as the electrode layer. Besides, various materials and forming methods capable of forming a transparent electrode layer are known, which can be applied without limitation.

The light modulating device may comprise other additional constitutions as necessary, while basically comprising the light modulating device. That is, depending on the driving mode, the implementation of the above-described transparent, black, high reflection and/or low reflection mode and switching between them are possible even with the light modulating device alone, but in order to facilitate the implementation or switching of these modes, it is also possible to include additional components.

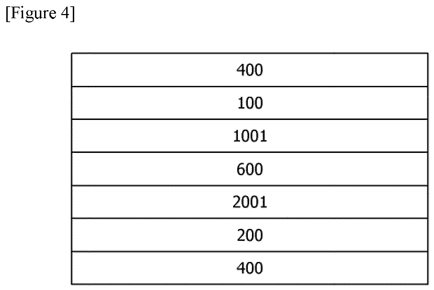

For example, the element may further comprise a polarization layer (passive polarization layer) disposed on one side or both sides of the light modulating device. Figure 3 is, as an example of the above structure, the case where in the structure of Figure 2, the polarization layer (400) is disposed only on one side of the light modulating device, and Figure 4 is the case where in the structure of Figure 2, the polarization layer (400) is disposed on both sides of the light modulating device. In addition, when the partition spacer is applied as the spacer and the shape is a tetragon (square or rectangle), the sides of the tetragon and the absorption axis of the polarization layer are suitably disposed to be substantially vertical or horizontal to each other.

The term polarization layer may mean an element that converts natural light or unpolarized light into polarized light. In one example, the polarization layer may be a linear polarization layer. The linear polarization layer means a case where the selectively transmitting light is linearly polarized light that vibrates in any one direction and the selectively absorbing or reflecting light is linearly polarized light that vibrates in directions orthogonal to the vibration direction of the linearly polarized light. That is, the linear polarization layer may have a transmission axis and absorption axes or reflection axes orthogonal to each other in the plane direction.

The polarization layer may be an absorptive polarization layer or a reflective polarization layer. As the absorptive polarization layer, for example, a polarization layer in which iodine is dyed to a polymer stretched film such as a PVA stretched film, or a guest-host polarization layer in which liquid crystals polymerized in an oriented state are used as a host and dichroic dyes arranged along the orientation of the liquid crystals are used as a guest may be used, without being limited thereto.

As the reflective polarization layer, for example, a reflective polarization layer known as a so-called DBEF (dual brightness enhancement film) or a reflective polarization layer formed by coating a liquid crystal compound such as LLC (lyotropic liquid crystal) may be used, but is not limited thereto.

As shown in Figure 4, it may have a structure in which the polarization layers are disposed on both sides of the light modulating device. In this case, the angle formed by the transmission axes of the polarization layers disposed on both sides may be in the range of 85 degrees to 95 degrees, or approximately perpendicular.

In one example, the optical element may also be configured without comprising any polarization layer. For example, an optical element may also be configured without applying any polarization layer after blending a dichroic dye as an additional component in the liquid crystal layer.

The light modulating device may comprise other necessary constitutions in addition to the above constitutions.

For example, the light modulating device may further comprise an optically anisotropic film satisfying the refractive index relationship of Equation 4 below. Such a film may further improve the performance of the device by optically compensating for the substrate or the transmittance variable layer. ${n}_{z} < {n}_{y}$

In Equation 4, n_{y} is the refractive index of the optically anisotropic film for a wavelength of 550 nm in the fast axis direction, and n_{z} is the refractive index of the optically anisotropic film for a wavelength of 550 nm in the thickness direction.

The optically anisotropic film satisfying the relationship of Equation 4 above is a film exhibiting the properties of a so-called negative C plate.

The thickness direction phase difference of such an optically anisotropic film may be, for example, in a range of less than 0 nm to -600 nm or more based on a wavelength of 550 nm. The optically anisotropic film may also exist in one layer or two or more layers in the optical element, and when the optically anisotropic film exists in one layer, the thickness direction phase difference is the thickness direction phase difference of the one layered-film, and when it exists in a plurality of two or more layers, it is the sum of thickness direction phase differences of all films.

In addition, the thickness direction phase difference is a physical quantity determined by Equation 5 below. ${R}_{th} = d \times \left({n}_{z}-{n}_{y}\right)$

In Equation 5, Rₜₕ is the thickness direction phase difference, n_{z} is the thickness direction refractive index of the film, n_{y} is the fast axis direction refractive index of the film, and d is the thickness of the film. Here, the meanings of the thickness direction and the fast axis are known in the industry.

As the optically anisotropic film, a film satisfying Equation 4 above, which is a known retardation film, may be applied, and as this type of film, for example, stretched polymer films or liquid crystal films, and the like are variously known in the industry.

The optically anisotropic film may be present on the first and/or second substrate, which may be formed, for example, on the first surface of the first and/or second substrate. At this time, the optically anisotropic film may be present between the first and/or second substrate and the transmittance variable layer; when the liquid crystal alignment film, or the silicone polymer layer is formed on the first surface, it may be formed between the first and/or second substrate and the liquid crystal alignment film, etc.; and when an electrode layer is formed on the first surface, it may also be formed between the first and/or second substrate and the electrode layer.

The light modulating device may comprise other constitutions, if necessary, in addition to the above constitutions. For example, any other constitution necessary for driving or using the light modulating device, such as a pressure-sensitive adhesive layer or adhesive layer for attaching other components in addition to the silicone polymer layer formed on the first surface of the first substrate, a hard coating film, an antireflection film and/or an NIR (near-infrared) cut layer, may be added.

A method for manufacturing the light modulating device is not particularly limited, and the element may be manufactured through a known method except that the above elements are applied as each component.

Such an optical element can be used for various applications, and can be used, for example, in eyewear such as sunglasses or eyewear for AR (augmented reality) or VR (virtual reality), exterior walls of buildings or sunroofs for vehicles, and the like.

### [Effects of Invention]

The present application can provide a light modulating device and a use thereof. The present application can provide a light modulating device that stably maintains orientation of a liquid crystal compound, while securing adhesive force between substrates disposed opposite to each other by applying a pressure-sensitive adhesive layer or adhesive layer, and particularly, is capable of stably maintaining or implementing the desired orientation state of the liquid crystal compound even at high temperatures for a long period of time, and a use thereof.

### [Brief Description of Drawings]

Figure 1 is a diagram showing a process of measuring transmittance T₁ and T₂.
Figures 2 to 4 are schematic diagrams of exemplary light modulating devices of the present application.

### [Mode for Invention]

Hereinafter, the light modulating device of the present application will be described in detail through examples, but the scope of the present application is not limited by the following examples.

### 1. Phase difference evaluation

The in-plane phase difference value (Rᵢₙ) of the film was measured for light having a wavelength of 550 nm using a UV/VIS spectroscope 8453 instrument from Agilent Co., Ltd. Two sheets of polarizers were installed in the UV/VIS spectroscope so that their transmission axes were orthogonal to each other, and a film was installed between the two sheets of polarizers so that its slow axis formed 45 degrees with the transmission axes of the two polarizers, respectively, and then the transmittance according to wavelengths was measured. The phase retardation order of each peak is obtained from the transmittance graph according to wavelengths. Specifically, a waveform in the transmittance graph according to wavelengths satisfies Equation A below, and the maximum peak (Tmax) condition in the sine waveform satisfies Equation B below. In the case of λmax in Equation A, since the T of Equation A and the T of Equation B are the same, the equations are expanded. As the equations are also expanded for n+1, n+2 and n+3, arranged for n and n+1 equations to eliminate R, and arranged for n into λn and λn+1 equations, the following Equation C is derived. Since n and λ can be known based on the fact that T of Equation A and T of Equation B are the same, R for each of λn, λn+1, λn+2 and λn+3 is obtained. A linear trend line of R values according to wavelengths for 4 points is obtained and the R value for the equation 550 nm is calculated. The function of the linear trend line is Y = ax+b, where a and b are constants. The Y value when 550 nm has been substituted for x of the function is the Rᵢₙ value for light having a wavelength of 550 nm. $T = {sin}^{2} \left[\left(2πR/λ\right)\right]$ $T = {sin}^{2} \left[\left(\left(2n+1\right)π/2\right)\right]$ $n = \left(λn-3λn+1\right) / \left(2λn+1+1-2λn\right)$

In the above, R denotes in-plane phase difference (Rᵢₙ), λ denotes a wavelength, and n denotes a nodal degree of a sine waveform.

### 2. Measurement of transmittance

For the light modulating device, the transmittance was measured in the following manner. The device for measuring transmittance was prepared in the following manner. The light modulating device manufactured in each of Examples or Comparative Examples was placed between two sheets of PVA (poly(vinyl alcohol)) polarization layers. The polarization layers were disposed so that their absorption axes were orthogonal to each other, and the light modulating device was disposed so that the slow axis of the substrate was perpendicular to the absorption axis of any one of the two sheets of polarization layers, and was parallel to the absorption axis of the other polarization layer.

In the above state, the transmittance (T₁ in Equation 1) for light with a wavelength of 370 nm to 780 nm was evaluated at room temperature (about 25°C). In the transmittance T₁, each transmittance was measured up to 780 nm at a wavelength interval of 2 nm with a starting wavelength of 370 nm, and then an average value of the measured transmittance was obtained to be set to the T₁. Any one of the two sheets of polarization layers was irradiated with light of the wavelength in the normal direction of the polarization layer toward the polarization layer, and the transmittance was measured along the normal direction of the surface of the polarization layer from the side of the polarization layer on the opposite side.

Subsequently, a temperature control device (LTS-350, Kinkam) was installed in the device. In the structure that a light source of the transmittance measuring device, a polarizer, a light modulating device, a polarizer, and a transmittance measuring part were sequentially disposed, the temperature control device was placed between the light modulating device and the polarizer (polarizer close to the transmittance measuring part).

Then, the light modulating device was maintained at 90°C for 5 minutes using the temperature control device, and the transmittance (T₂ in Equation 1) was evaluated in the same manner as above in a state of maintaining the temperature at 90°C.

In the process of evaluating the transmittance T₁ and T₂, and the process of maintaining the light modulating device at 90°C for 5 minutes, the power was not applied to the light modulating device, and thus the liquid crystal layer was in a vertical orientation state.

The transmittance was evaluated using Blue Wave equipment (manufacturer: Stellar Net).

### 3. Measurement of temporal change for 30 days

Temporal changes for 30 days were measured in the following manner. As described in Examples or Comparative Examples, a silicone polymer layer was formed on a PET (poly(ethylene terephthalate)) film (manufactured by SKC, high-stretch PET, Rin = about 10,000 nm) with a thickness of about 145µm or so that an ITO (indium tin oxide) electrode layer was formed on one side to a thickness of about 8 µm or so.

Immediately after forming the silicone polymer layer, the substrate was cut to manufacture a light modulating device in the same manner as in Example 1, and the transmittance (Tᵢ) was measured in the same manner as the method for measuring the transmittance T₁ described in the item of transmittance.

In addition to the substrate used for manufacturing the light modulating device, the remaining substrate (substrate on which the silicone polymer layer was formed) was maintained under room temperature/normal pressure/normal humidity conditions for 30 days, and then a light modulating device was manufactured in the same manner as above with the relevant substrate, and the transmittance (Tₐ) was measured in the same manner as above.

Subsequently, ΔT₃₀ was obtained by assigning the transmittance Tᵢ and Tₐ into Equation A below, and when the absolute value thereof was 300% or less, it was evaluated as OK, and when it was more than 300%, it was evaluated as NG. $Δ {T}_{30} = 100 \times \frac{\left({T}_{a}-{T}_{i}\right)}{{T}_{i}}$

### Example 1

A PET (poly(ethylene terephthalate)) film (manufactured by SKC, high-stretch PET) with a thickness of about 145µm or so that an ITO (indium tin oxide) electrode layer was formed on one side was used as a first substrate. The in-plane phase difference of the PET film was about 10,000 nm or so based on a wavelength of 550 nm.

A silicone polymer layer was formed on the ITO electrode layer of the PET film. The silicone polymer layer was formed using a silicone OCA (Optically Clear Adhesive) composition (manufactured by Si-Feliz, HA-578A product, solid content: 60 weight%) forming a pressure-sensitive adhesive layer.

A platinum catalyst (manufactured by Si-Feliz, HA-04C product) as a catalyst was introduced to the silicone OCA (Optically Clear Adhesive) composition (manufactured by Si-Feliz, HA-578A product) to have a ratio of about 1.67 weight%, and a polyorganosiloxane of the following Formula A (manufactured by gelest) was introduced thereto to prepare a coating liquid. The polyorganosiloxane of Formula A above was introduced so that the polyorganosiloxane was present in a concentration of about 13.3 weight% in the formed silicone polymer layer.

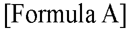

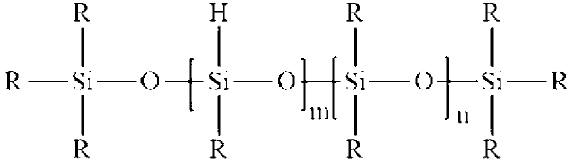

In Formula A, R is a methyl group, m is the number of about 7 or so, and n is the number of about 600 or so.

Subsequently, the coating liquid was bar-coated on the ITO layer of the first substrate, and maintained at a temperature of about 140°C or so for 4 minutes to be cured, thereby forming a silicone polymer layer with a thickness of about 8 µm or so.

The coating was formed so that the silicone polymer layer covered the entire area of the ITO layer formed on the entire surface of the PET film.

In the silicone polymer layer to which the polyorganosiloxane of Formula A above is added, M₁ of Equation 2 is about 60.13 g/mol as the molar mass (g/mol) of the siloxane unit HMeSiO_{2/2}, m is about 8, and β is 13.3 weight%.

In addition, the molar mass of the polyorganosiloxane of Formula A above is about 45,075 g/mol.

Therefore, in Equation 2 below, 60.13 for M₁, 7 for m, 13.3 for β, and 45,075 for M₂ are substituted, whereby δ is calculated as about 12.4. $δ = \frac{100 \times {M}_{1} \times m \times β}{{M}_{2}}$

A PET (poly(ethylene terephthalate)) film (manufactured by Toyobo, SRF product) with a thickness of about 80 µm or so that an ITO (indium tin oxide) layer was formed on the surface was used as a second substrate. The in-plane phase difference of the second substrate was about 9,000 nm or so at a wavelength of 550 nm.

Partition wall-type spacers having a pitch of about 350 µm or so, a line width of about 10 µm or so, and a height of 6 µm or so, as a partition wall-type spacer forming a rectangular closed figure, were formed on the ITO layer of the PET film in an area ratio of about 9% (ratio of the area occupied by the spacers to the total substrate area).

A vertical alignment film (5661LB3, Nissan) was formed on the spacers. The alignment film material (5661LB3, Nissan) was diluted in a solvent to have a solid content of about 2.2 weight%, #2 bar-coated, and then maintained at 100°C for 10 minutes to form the alignment film. It was rubbed in one direction to form the vertical alignment film. The rubbing direction was perpendicular to the slow axis direction of the second substrate.

Subsequently, a light modulating device was manufactured by coating a liquid crystal composition on the vertical alignment film of the second substrate, and laminating the second substrate and the first substrate so that the surface of the second substrate on which the vertical alignment film was formed and the silicone polymer layer of the first substrate faced each other. During the lamination, the slow axes of the first and second substrates were parallel to each other.

As the liquid crystal composition, a composition comprising a nematic liquid crystal compound (Merck, MAT-19-1205) and a chiral dopant (Merck, S811) was used. The content of the chiral dopant was adjusted so that the twisted orientation pitch (chiral pitch) (p) was about 20 µm or so.

### Example 2

A light modulating device was manufactured in the same manner as in Example 1, except that a polyorganosiloxane of Formula B below was used instead of the polyorganosiloxane of Formula A during the process of forming the silicone polymer layer.

Upon preparation of the coating liquid, the polyorganosiloxane of Formula B above was introduced thereto so that the polyorganosiloxane was present in a concentration of about 5 weight% in the formed silicone polymer layer.

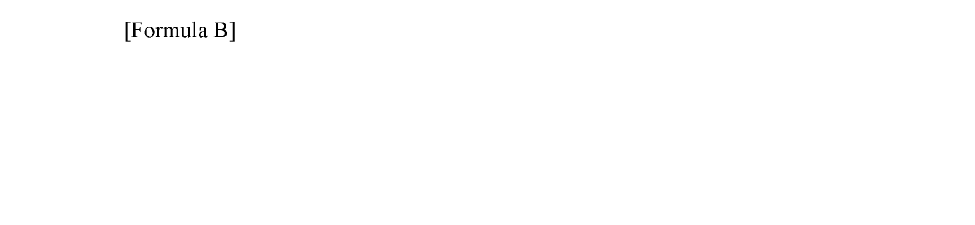

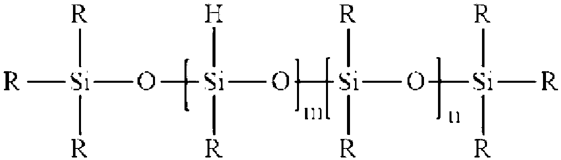

In Formula B, R is a methyl group, m is the number of about 1 or so, and n is the number of about 17 or so.

In the silicone polymer layer to which the polyorganosiloxane of Formula B above is added, M₁ of Equation 2 is about 60.13 g/mol as the molar mass (g/mol) of the siloxane unit HMeSiO_{2/2}, m is 1, and β is 5 weight%.

In addition, the molar mass of the polyorganosiloxane of Formula B above is about 1,483 g/mol.

Therefore, in Equation 2 below, 60.13 for M₁, 1 for m, 5 for β, and 1,483 for M₂ are substituted, whereby δ is calculated as about 20.3. $δ = \frac{100 \times {M}_{1} \times m \times β}{{M}_{2}}$

### Example 3

A light modulating device was manufactured in the same manner as in Example 1, except that a polyorganosiloxane of Formula C below was used instead of the polyorganosiloxane of Formula A during the process of forming the silicone polymer layer.

Upon preparation of the coating liquid, the polyorganosiloxane of Formula C above was introduced thereto so that the polyorganosiloxane was present in a concentration of about 3.30 weight% in the formed silicone polymer layer.

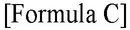

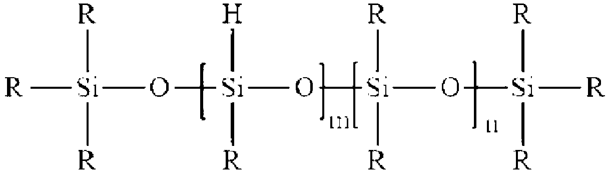

In Formula C, R is a methyl group, m is the number of about 5 or so, and n is the number of about 19 or so.

In the silicone polymer layer to which the polyorganosiloxane of Formula C above is added, M₁ of Equation 2 is about 60.13 g/mol as the molar mass (g/mol) of the siloxane unit HMeSiO_{2/2}, m is about 5, and β is 3.30 weight%.

In addition, the molar mass of the polyorganosiloxane of Formula C above is about 1,872 g/mol.

Therefore, in Equation 2 below, 60.13 for M₁, 5 for m, 3.3 for β, and 1,872 for M₂ are substituted, whereby δ is calculated as about 53. $δ = \frac{100 \times {M}_{1} \times m \times β}{{M}_{2}}$

**Example 4**A light modulating device was manufactured in the same manner as in Example 1, except that the polyorganosiloxane of Formula B in Example 2 above and the polyorganosiloxane of Formula C in Example 3 were applied together instead of the polyorganosiloxane of Formula A in the process of forming the silicone polymer layer.

Upon preparation of the coating liquid, the polyorganosiloxane of Formula B above was introduced thereto so that the polyorganosiloxane was present in a concentration of about 2.5 weight% in the formed silicone polymer layer.

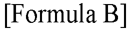

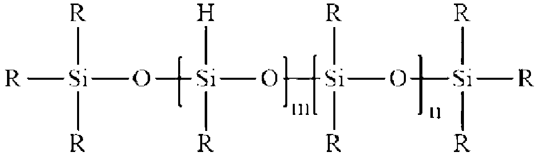

In Formula B, R is a methyl group, m is the number of about 1 or so, and n is the number of about 17 or so.

In the silicone polymer layer to which the polyorganosiloxane of Formula B above is added, M₁ of Equation 2 is about 60.13 g/mol as the molar mass (g/mol) of the siloxane unit HMeSiO_{2/2}, m is about 1, and β is 2.5 weight%.

In addition, the molar mass of the polyorganosiloxane of Formula B above is about 1,483 g/mol.

Therefore, in Equation 2 below, 60.13 for M₁, 1 for m, 2.5 for β, and 1,483 for M₂ are substituted, whereby δ is calculated as about 10.1. $δ = \frac{100 \times {M}_{1} \times m \times β}{{M}_{2}}$

In addition, upon preparation of the coating liquid, the polyorganosiloxane of Formula C above was introduced thereto so that the polyorganosiloxane was present in a concentration of about 0.8 weight% in the formed silicone polymer layer.

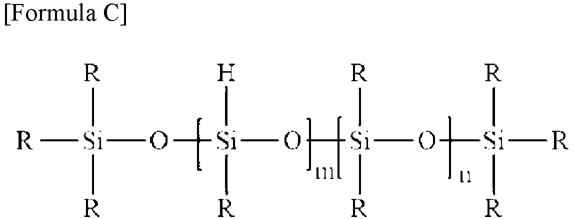

In Formula C, R is a methyl group, m is about 5 or so, and n is about 19 or so.

In the silicone polymer layer to which the polyorganosiloxane of Formula C above is added, M₁ of Equation 2 is about 60.13 g/mol as the molar mass (g/mol) of the siloxane unit HMeSiO_{2/2}, m is about 5, and β is 0.8 weight%.

In addition, the molar mass of the polyorganosiloxane of Formula C above is about 1,872 g/mol.

Therefore, in Equation 2 below, 60.13 for M₁, 5 for m, 0.8 for β, and 1,872 for M₂ are substituted, whereby δ is calculated as about 12.8. $δ = \frac{100 \times {M}_{1} \times m \times β}{{M}_{2}}$

Thus, in the case of Example 4, the final δ is calculated as about 22.9 (=10.1+12.8).

### Comparative Example 1

A light modulating device was manufactured in the same manner as in Example 1, except that as the coating liquid, a coating liquid prepared by introducing a platinum catalyst (manufactured by Si-Feliz, HA-04C product) as the catalyst to a silicone OCA (Optically Clear Adhesive) composition (manufactured by Si-Feliz, HA-578A product, solid content about 60 weight%) to have a ratio of about 1.67 weight% was used.

### Comparative Example 2

A light modulating device was manufactured in the same manner as in Example 1, except that upon preparation of the coating liquid, the polyorganosiloxane of Formula A was introduced thereto so that the polyorganosiloxane was presented in a concentration of about 6.7 weight% in the formed silicone polymer layer.

In this case, in Equation 2 below, 60.13 for M₁, 7 for m, 6.7 for β, and 45,075 for M₂ are substituted, whereby δ is calculated as about 6.3. $δ = \frac{100 \times {M}_{1} \times m \times β}{{M}_{2}}$

### Comparative Example 3

A light modulating device was manufactured in the same manner as in Example 2, except that upon preparation of the coating liquid, the polyorganosiloxane of Formula B was introduced thereto so that the polyorganosiloxane was present in a concentration of about 2.5 weight% in the formed silicone polymer layer.

Therefore, in Equation 2 below, 60.13 for M₁, 1 for m, 2.5 for β, and 1,483 for M₂ are substituted, whereby δ is calculated as about 10.1. $δ = \frac{100 \times {M}_{1} \times m \times β}{{M}_{2}}$

### Comparative Example 4

A light modulating device was manufactured in the same manner as in Example 3, except that upon preparation of the coating liquid, the polyorganosiloxane of Formula C was introduced thereto so that the polyorganosiloxane was present in a concentration of about 1.7 weight% in the formed silicone polymer layer.

Therefore, in Equation 2 below, 60.13 for M₁, 5 for m, 1.7 for β, and 1,872 for M₂ are substituted, whereby δ is calculated as about 27.3. $δ = \frac{100 \times {M}_{1} \times m \times β}{{M}_{2}}$

The evaluation results of the light modulating devices of Examples and Comparative Examples above were summarized and described in Table 1 below.

In Table 1 below, Tₒₙ is the transmittance that the transmittance is measured in the same manner as the method of measuring the transmittance T₁ in the item describing the transmittance measurement method, but measured in a state where a voltage is applied to the light modulating device under square wave form conditions (48Vrms, 60Hz).

**[Table 1]**

| | Example | | | | | Comparative Example | | | |
|---|---|---|---|---|---|---|---|---|---|
| | 1 | 2 | 3 | 4 | | 1 | 2 | 3 | 4 |
| M₁ in Equation 2 | 60.13 | 60.13 | 60.13 | 60.13 | 60.13 | - | 60.13 | 60.13 | 60.13 |
| m in Equation 2 | 7 | 1 | 5 | 1 | 5 | - | 7 | 1 | 5 |
| β in Equation 2 | 13.3 | 5 | 3.3 | 2.5 | 0.8 | - | 6.7 | 2.5 | 1.7 |
| M₂ in Equation 2 | 45075 | 1483 | 1872 | 1483 | 1872 | - | 45075 | 1483 | 1872 |
| δ | 12.4 | 20.3 | 53 | 22.9 | | - | 6.3 | 10.1 | 27.3 |
| T₁ (%) | 0.2 | 0.2 | 0.2 | 0.2 | | 0.2 | 0.2 | 0.2 | 0.2 |
| T₂ (%) | 0.18 | 0.2 | 0.18 | 0.18 | | 8 | 7.8 | 7.8 | 6.8 |
| Tₒₙ (%) | 24.3 | 25.1 | 24.4 | 24.2 | | 25.2 | 25.1 | 24.9 | 24.4 |
| Temporal changes for 30 days | OK | OK | OK | OK | | NG | NG | NG | NG |

As shown in Table 1, the light modulating devices of the present application exhibited excellent reliability in the case of being maintained at a high temperature condition and in the case of being maintained for a long period of time.

However, Comparative Example 1 not containing the polyorganosiloxane of Formula 1, Comparative Examples 2 and 3 including it but having δ values not exceeding 10, and Comparative Example 4 having a low content of the polyorganosiloxane all did not exhibit adequate results.

## Claims

1. A light modulating device comprising:
first and second substrates disposed opposite to each other;
a liquid crystal layer present between the first and second substrates; and
a silicone polymer layer present between the first substrate and the liquid crystal layer, wherein
the silicone polymer layer is a cured layer of a curable composition comprising a polyorganosiloxane having a siloxane unit of Formula 1 below, and **characterized in that**
an absolute value of ΔT of Equation 1 below is 300% or less, and
δ in Equation 2 below is 10.5 or more:
[Formula 1] (HRSiO_{2/2})
wherein, R is an alkyl group, an alkoxy group or an aryl group: $Δ T = 100 \times \frac{\left({T}_{2}-{T}_{1}\right)}{{T}_{1}}$
wherein, T₂ is the transmittance at 90°C in a state where the light modulating device maintained at 90°C for 5 minutes is placed between orthogonal polarizers, and T₁ is the transmittance at 25°C in a state where the light modulating device before being maintained at 90°C for 5 minutes is placed between orthogonal polarizers, where the T₁ and T₂ are the transmittance in a state where the liquid crystal layer is vertically oriented, and the liquid crystal layer is in a vertically oriented state during the maintenance at the 90°C for 5 minutes. $δ = \frac{100 \times {M}_{1} \times m \times β}{{M}_{2}}$
wherein, M₁ is the molar mass (g/mol) of the siloxane unit of Formula 1, m is the number of moles of the siloxane unit of Formula 1 above in the polyorganosiloxane having the siloxane unit of Formula 1 above, β is the content (weight%) of the polyorganosiloxane having the siloxane unit of Formula 1 above in the silicone polymer layer, and M₂ is the molar mass (g/mol) of the polyorganosiloxane having the siloxane unit of Formula 1 above.

2. The light modulating device according to claim 1, wherein the silicone polymer layer is a pressure-sensitive adhesive layer or an adhesive layer.

3. The light modulating device according to claim 1, wherein the silicone polymer layer is formed on the surface of the first substrate, and the area of the silicone polymer layer is 70% or more of the total area of the first substrate.

4. The light modulating device according to claim 3, wherein the silicone polymer layer is in contact with the liquid crystal layer.

5. The light modulating device according to claim 1, wherein no liquid crystal alignment film exists between the liquid crystal layer and the first substrate.

6. The light modulating device according to claim 1, wherein a ratio of the number of moles of the siloxane units of Formula 1 to the total number of moles of siloxane units in the polyorganosiloxane is 0.001 mol% or more to less than 100 mol%.

7. The light modulating device according to claim 1, wherein the polyorganosiloxane has a linear or branched structure, and the terminal is blocked by a siloxane unit of Formula 2 below:
[Formula 2] (R¹₃SiO_{1/2})
wherein, R¹ is hydrogen, an alkyl group, an alkoxy group or an aryl group.

8. The light modulating device according to claim 1, wherein the polyorganosiloxane further comprises a siloxane unit of Formula 3 below:
[Formula 3] (R²₂SiO_{2/2})
wherein, R² is an alkyl group, an alkoxy group or an aryl group.

9. The light modulating device according to claim 1, wherein the polyorganosiloxane is represented by Formula 4 below: 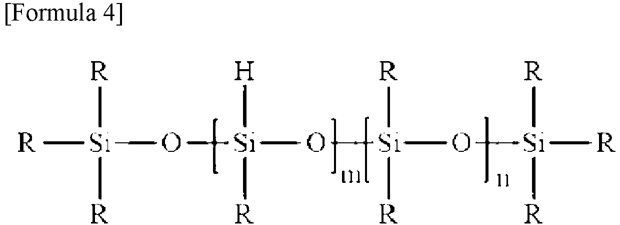 wherein, Rs are each independently an alkyl group, an alkoxy group or an aryl group, m is a number in a range of 1 to 1,000, and n is a number in a range of 0 to 20,000.

10. The light modulating device according to claim 1, wherein the content of the polyorganosiloxane having the siloxane unit of Formula 1 in the silicone polymer layer is 2 weight% or more.

11. The light modulating device according to claim 1, wherein a liquid crystal alignment film is present between the liquid crystal layer and the second substrate, preferably wherein the liquid crystal alignment film is a vertical alignment film.

12. The light modulating device according to claim 1, wherein partition wall-type spacers are formed between the first and second substrates to maintain a gap between the first and second substrates.

13. The light modulating device according to claim 1, wherein the initial state of the liquid crystal layer is a vertical orientation state,
preferably wherein the liquid crystal layer is formed to be capable of switching between a vertical orientation state and a twisted orientation state.

14. The light modulating device according to claim 1, wherein the first and second substrates have each an in-plane phase difference of 500 nm or more for light with a wavelength of 550 nm.

## Patentansprüche

1. Lichtmodulierende Vorrichtung, umfassend:
ein erstes und ein zweites Substrat, die einander gegenüberliegend angeordnet sind;
eine Flüssigkristallschicht, die zwischen dem ersten und dem zweiten Substrat vorhanden ist; und
eine Silikonpolymerschicht, die zwischen dem ersten Substrat und der Flüssigkristallschicht vorhanden ist, wobei
die Silikonpolymerschicht eine gehärtete Schicht aus einer härtbaren Zusammensetzung ist, die ein Polyorganosiloxan mit einer Siloxaneinheit der nachstehenden Formel 1 umfasst, und **dadurch gekennzeichnet, dass**
ein Absolutwert von ΔT der nachstehenden Gleichung 1 300 % oder weniger beträgt und
δ in der nachstehenden Gleichung 2 10,5 oder mehr beträgt:
[Formel 1] (HRSiO_{2/2})
wobei R eine Alkylgruppe, eine Alkoxygruppe oder eine Arylgruppe ist: $Δ T = 100 \times \frac{\left({T}_{2}-{T}_{1}\right)}{{T}_{1}}$
wobei T₂ die Durchlässigkeit bei 90°C in einem Zustand ist, in dem die lichtmodulierende Vorrichtung, die für 5 Minuten bei 90°C gehalten wird, zwischen orthogonalen Polarisatoren angeordnet ist, und T₁ die Durchlässigkeit bei 25°C in einem Zustand ist, in dem die lichtmodulierende Vorrichtung, bevor sie für 5 Minuten bei 90°C gehalten wird, zwischen orthogonalen Polarisatoren angeordnet ist, wobei T₁ und T₂ die Durchlässigkeit in einem Zustand sind, in dem die Flüssigkristallschicht vertikal orientiert ist, und die Flüssigkristallschicht während des Haltens für 5 Minuten bei 90°C in einem vertikal orientierten Zustand ist, $δ = \frac{100 \times {M}_{1} \times m \times β}{{M}_{2}}$
wobei M₁ die Molmasse (g/mol) der Siloxaneinheit der Formel 1 ist, m die Molzahl der Siloxaneinheit der vorstehenden Formel 1 in dem Polyorganosiloxan mit der Siloxaneinheit der vorstehenden Formel 1 ist, β der Gehalt (Gew.-%) des Polyorganosiloxans mit der Siloxaneinheit der vorstehenden Formel 1 in der Silikonpolymerschicht ist und M₂ die Molmasse (g/mol) des Polyorganosiloxans mit der Siloxaneinheit der vorstehenden Formel 1 ist.

2. Lichtmodulierende Vorrichtung nach Anspruch 1, wobei die Silikonpolymerschicht eine druckempfindliche Klebeschicht oder eine Klebeschicht ist.

3. Lichtmodulierende Vorrichtung nach Anspruch 1, wobei die Silikonpolymerschicht auf der Oberfläche des ersten Substrats gebildet ist und die Fläche der Silikonpolymerschicht 70 % oder mehr der Gesamtfläche des ersten Substrats beträgt.

4. Lichtmodulierende Vorrichtung nach Anspruch 3, wobei die Silikonpolymerschicht in Kontakt mit der Flüssigkristallschicht ist.

5. Lichtmodulierende Vorrichtung nach Anspruch 1, wobei kein Flüssigkristallausrichtungsfilm zwischen der Flüssigkristallschicht und dem ersten Substrat vorhanden ist.

6. Lichtmodulierende Vorrichtung nach Anspruch 1, wobei ein Verhältnis der Molzahl der Siloxaneinheiten der Formel 1 zu der Gesamtmolzahl von Siloxaneinheiten in dem Polyorganosiloxan 0,001 Mol-% oder mehr bis weniger als 100 Mol-% beträgt.

7. Lichtmodulierende Vorrichtung nach Anspruch 1, wobei das Polyorganosiloxan eine lineare oder verzweigte Struktur aufweist und das Terminal durch eine Siloxaneinheit der nachstehenden Formel 2 blockiert ist:
[Formel 2] (R¹₃SiO_{1/2})
wobei R¹ Wasserstoff, eine Alkylgruppe, eine Alkoxygruppe oder eine Arylgruppe ist.

8. Lichtmodulierende Vorrichtung nach Anspruch 1, wobei das Polyorganosiloxan ferner eine Siloxaneinheit der nachstehenden Formel 3 umfasst:
[Formel 3] (R²₂SiO_{2/2})
wobei R² eine Alkylgruppe, eine Alkoxygruppe oder eine Arylgruppe ist.

9. Lichtmodulierende Vorrichtung nach Anspruch 1, wobei das Polyorganosiloxan durch die nachstehende Formel 4 dargestellt ist: 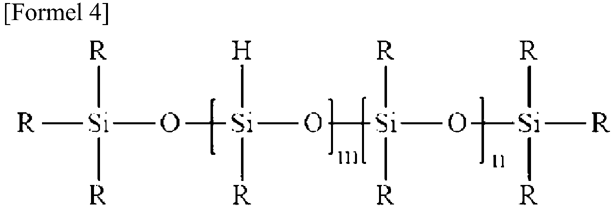 wobei Rs jeweils unabhängig eine Alkylgruppe, eine Alkoxygruppe oder eine Arylgruppe sind, m eine Zahl in einem Bereich von 1 bis 1.000 ist und n eine Zahl in einem Bereich von 0 bis 20.000 ist.

10. Lichtmodulierende Vorrichtung nach Anspruch 1, wobei der Gehalt des Polyorganosiloxans mit der Siloxaneinheit der Formel 1 in der Silikonpolymerschicht 2 Gew.-% oder mehr beträgt.

11. Lichtmodulierende Vorrichtung nach Anspruch 1, wobei ein Flüssigkristallausrichtungsfilm zwischen der Flüssigkristallschicht und dem zweiten Substrat vorhanden ist, wobei der Flüssigkristallausrichtungsfilm vorzugsweise ein vertikaler Ausrichtungsfilm ist.

12. Lichtmodulierende Vorrichtung nach Anspruch 1, wobei trennwandartige Abstandshalter zwischen dem ersten und dem zweiten Substrat ausgebildet sind, um einen Spalt zwischen dem ersten und dem zweiten Substrat aufrechtzuerhalten.

13. Lichtmodulierende Vorrichtung nach Anspruch 1, wobei der Anfangszustand der Flüssigkristallschicht ein vertikaler Orientierungszustand ist,
wobei die Flüssigkristallschicht vorzugsweise so ausgebildet ist, dass sie zwischen einem vertikalen Orientierungszustand und einem verdrehten Orientierungszustand umschalten kann.

14. Lichtmodulierende Vorrichtung nach Anspruch 1, wobei das erste und das zweite Substrat jeweils eine Phasendifferenz in der Ebene von 500 nm oder mehr für Licht mit einer Wellenlänge von 550 nm aufweisen.

## Revendications

1. Dispositif de modulation de lumière comprenant :
des premier et deuxième substrats disposés opposés l'un à l'autre ;
une couche de cristaux liquides présente entre les premier et deuxième substrats ; et
une couche de polymère de silicone présente entre le premier substrat et la couche de cristaux liquides, dans lequel
la couche de polymère de silicone est une couche durcie d'une composition durcissable comprenant un polyorganosiloxane ayant une unité de siloxane de la Formule 1 ci-dessous, et **caractérisé en ce que**
une valeur absolue de ΔT de l'Équation 1 ci-dessous est égale ou inférieure à 300 %, et
δ dans l'Équation 2 ci-dessous est égal ou supérieur à 10,5 :
[Formule 1] (HRSiO_{2/2})
dans lequel, R est un groupe alkyle, un groupe alkoxy ou un groupe aryle : $Δ T = 100 \times \frac{\left({T}_{2}-{T}_{1}\right)}{{T}_{1}}$
dans lequel, T₂ est la transmittance à 90°C dans un état où le dispositif de modulation de lumière maintenu à 90°C pendant 5 minutes est placé entre des polariseurs orthogonaux, et T₁ est la transmittance à 25°C dans un état où le dispositif de modulation de lumière avant d'être maintenu à 90°C pendant 5 minutes est placé entre des polariseurs orthogonaux, où T₁ et T₂ sont la transmittance dans un état où la couche de cristaux liquides est orientée à la verticale, et la couche de cristaux liquides est dans un état d'orientation à la verticale pendant le maintien à 90°C pendant 5 minutes. $δ = \frac{100 \times {M}_{1} \times m \times β}{{M}_{2}}$
dans lequel, M₁ est la masse molaire (g/mol) de l'unité de siloxane de la Formule 1, m est le nombre de moles de l'unité de siloxane de la Formule 1 ci-dessus dans le polyorganosiloxane ayant l'unité de siloxane de la Formule 1 ci-dessus, β est la teneur (% en poids) du polyorganosiloxane ayant l'unité de siloxane de la Formule 1 ci-dessus dans la couche de polymère de silicone, et M₂ est la masse molaire (g/mol) du polyorganosiloxane ayant l'unité de siloxane de la Formule 1 ci-dessus.

2. Dispositif de modulation de lumière selon la revendication 1, dans lequel la couche de polymère de silicone est une couche adhésive sensible à la pression ou une couche adhésive.

3. Dispositif de modulation de lumière selon la revendication 1, dans lequel la couche de polymère de silicone est formée sur la surface du premier substrat, et l'aire de la couche de polymère de silicone est égale ou supérieure à 70 % de l'aire totale du premier substrat.

4. Dispositif de modulation de lumière selon la revendication 3, dans lequel la couche de polymère de silicone est en contact avec la couche de cristaux liquides.

5. Dispositif de modulation de lumière selon la revendication 1, dans lequel aucun film d'alignement de cristaux liquides n'existe entre la couche de cristaux liquides et le premier substrat.

6. Dispositif de modulation de lumière selon la revendication 1, dans lequel un rapport du nombre de moles des unités de siloxane de la Formule 1 au nombre total de moles d'unités de siloxane dans le polyorganosiloxane est égal ou supérieur à 0,001 % en moles et inférieur à 100 % en moles.

7. Dispositif de modulation de lumière selon la revendication 1, dans lequel le polyorganosiloxane a une structure linéaire ou ramifiée, et la borne est bloquée par une unité de siloxane de la Formule 2 ci-dessous :
[Formule 2] (R¹₃SiO_{1/2})
dans lequel, R¹ est un hydrogène, un groupe alkyle, un groupe alkoxy ou un groupe aryle.

8. Dispositif de modulation de lumière selon la revendication 1, dans lequel le polyorganosiloxane comprend en outre une unité de siloxane de la Formule 3 ci-dessous :
[Formule 3] (R²₂SiO_{2/2})
dans lequel, R² est un groupe alkyle, un groupe alkoxy ou un groupe aryle.

9. Dispositif de modulation de lumière selon la revendication 1, dans lequel le polyorganosiloxane est représenté par la Formule 4 ci-dessous : 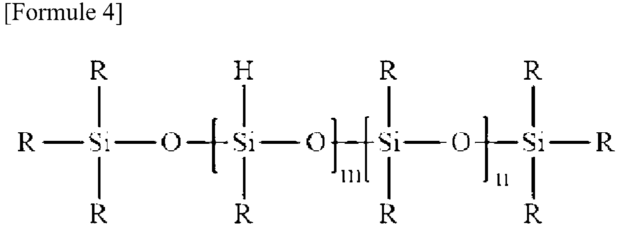 dans lequel, les R sont chacun indépendamment un groupe alkyle, un groupe alkoxy ou un groupe aryle, m est un nombre dans une plage de 1 à 1000, et n est un nombre dans une plage de 0 à 20 000.

10. Dispositif de modulation de lumière selon la revendication 1, dans lequel la teneur du polyorganosiloxane ayant l'unité de siloxane de la Formule 1 dans la couche de polymère de silicone est égale ou supérieure à 2 % en poids.

11. Dispositif de modulation de lumière selon la revendication 1, dans lequel un film d'alignement de cristaux liquides est présent entre la couche de cristaux liquides et le deuxième substrat, de préférence dans lequel le film d'alignement de cristaux liquides est un film d'alignement vertical.

12. Dispositif de modulation de lumière selon la revendication 1, dans lequel des éléments d'espacement de type paroi de séparation sont formés entre les premier et deuxième substrats pour maintenir un espace entre les premier et deuxième substrats.

13. Dispositif de modulation de lumière selon la revendication 1, dans lequel l'état initial de la couche de cristaux liquides est un état d'orientation verticale,
de préférence dans lequel la couche de cristaux liquides est formée pour être apte à commuter entre un état d'orientation verticale et un état d'orientation en torsion.

14. Dispositif de modulation de lumière selon la revendication 1, dans lequel les premier et deuxième substrats ont chacun une différence de phase dans le plan égale ou supérieure à 500 nm pour une lumière ayant une longueur d'onde de 550 nm.
